# EUROPEAN PATENT SPECIFICATION

(11) **EP 1 744 266 B1**
(45) Date of publication and mention of the grant of the patent: **15.02.2012**
(21) Application number: 06251847.7
(22) Date of filing: 31.03.2006
(51) Int. Cl.: G06K 15/00, G06F 17/21

(54) **Image forming system with page number setting section**
Bilderzeugungssystem mit einem Bereich zum Erzeugen einer Seitennumerierung
Système de formation d'image comportant une section pour numéroter des pages

(30) Priority: 04.07.2005 JP 2005195048
(43) Date of publication of application: 17.01.2007
(73) Proprietor: Konica Minolta Business Technologies, Inc., Tokyo 100-0005 (JP)
(72) Inventor: Ushio, Masaru, Hachioji-shi, Tokyo 192-8505 (JP); Kurohata, Takao, Hachioji-shi, Tokyo 192-8505 (JP); Yamaguchi, Hiroshi, Hachioji-shi, Tokyo 192-8505 (JP)
(74) Representative: Gille Hrabal

(56) References cited:
- EP-A- 1 496 447

## Description

This application is based on Japanese Patent Application NO. 2005-195048 filed on July 04, 2005 in Japanese Patent Office.

### BACKGROUND OF THE INVENTION

The present invention relates to an image forming apparatus provided with an image forming section which forms an image onto a recording medium and a post-processing section which applies post-processing to the recording medium on which the document image is formed, and further relates to image forming system in which the image forming apparatus and the operating apparatus which operates the image forming apparatus are coupled to each other so as to make it possible to communicate with each other.

In recent years, there has been introduced in the market an image forming apparatus that is provided with an image forming unit for forming a document image onto a recording medium and a post-processing device for applying post-processing, such as a punch processing, a staple processing, a fold processing, etc., to the recording medium on which the document image is formed.

EP-1 496 447-A2 discloses an information processing and image forming apparatus common in the industry. It discloses all the features of the preamble of claim 1.

For instance, as the image forming apparatus mentioned in the above, Patent Document 1 sets forth a copier that is provided with a inputting section for designating an arbitral page and a controlling unit for controlling a binding operation so as to bind the copied papers up to the designated page for every designated page, so as to make it possible to apply the binding operation for every binding part at a time, after outputting all of bunches of recording mediums including a plurality of binding parts.

Further, an image forming apparatus, having functions of a page number printing, a layout processing, etc., in addition to the post-processing, such as a punch processing, a staple processing, etc., has emerged in the market. A certain image forming apparatus categorized in the abovementioned image forming apparatus makes it possible to change settings of image forming conditions in a unit of a plurality of recording mediums, a job, a plurality of pages or a page.

For instance, Patent Document 2 sets forth an image forming apparatus in which a document including a plurality of pages is divided into a plurality of groups so as to conduct image forming operations for all groups according to the image forming conditions established for every group, and another image forming apparatus in which, separating from the first image forming conditions in regard to the whole document including a plurality of pages, a setting section for setting at least one of a layout, an addition of information and a post-processing as conditions (the second image forming conditions) being different from the first image forming conditions, for a predetermined page among the whole document including a plurality of pages, is provided.
[Patent Document 1]
   Tokkaihei 4-142993 (Japanese Non-Examined Patent Publication)
[Patent Document 2]
   Tokkai 2004-287411 (Japanese Non-Examined Patent Publication)

In the conventional image forming apparatus as described in the foregoing, however, when the page numbers should be printed onto the document constituted by plural document groups each of which includes a plurality of document pages, since the page numbers are serially printed throughout all pages included in the whole document unless the user sets the stating page number for every document page or every document group, it is necessary for the user to set the stating page number for every document page or every document group. There has been a problem that such setting operation has been complicated and cumbersome works for the user.

### SUMMARY OF THE INVENTION

To overcome the abovementioned drawbacks in conventional image forming apparatus, it is an object of the present invention to provide an image forming apparatus and an image forming system, which make it possible to improve the user-friendliness in the processing operation for printing the page numbers.

Accordingly, to overcome the cited shortcomings, the abovementioned object of the present invention can be attained by image forming apparatus and image forming systems according to claims 1 and 6. Further advantageous features are according to dependent claims 2-5 and 7-11.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig. 1 shows a configuration of an image forming system, embodied in the present invention;
Fig. 2 shows an internal configuration of an operating apparatus;
Fig. 3 shows an example of a setup screen G0;
Fig. 4 shows an example of a page unit setting screen G20a;
Fig. 5 shows an example of a watermark setting screen G30;
Fig. 6 shows a cross-sectional view of an image forming apparatus, embodied in the present invention;
Fig. 7 shows a block diagram of a controlling system of an image forming apparatus, embodied in the present invention;
Fig. 8 shows an example of job data;
Fig. 9 shows a flowchart of processing to be implemented at a starting time of print processing;
Fig. 10 shows a flowchart of a print page setting processing;
Fig. 11 shows a flowchart of processing to be implemented when an image writing signal PVV is changed to OFF state from ON state after a print processing is commenced;
Fig. 12(a), Fig. 12(b) and Fig. 12(c) show exemplified illustrations of print processing to be performed in the present embodiment;
Fig. 13 shows a time chart of operations of an image forming apparatus 2, which implements the print processing shown in Figs. 12(a), 12(b), 12(c);
Fig. 14 shows an example of a page unit setting screen G20b,
Fig. 15(a), Fig. 15 (b) and Fig. 15 (c) show exemplified illustrations of other print processing to be performed in the present embodiment; and
Fig. 16 shows a time chart of other operations of the image forming apparatus 2, which implements the print processing shown in Figs. 15(a), 15(b), 15(c).

### DETAILED DESCRIPTION OF THE PREFERRED EMBODIMENT

Referring to the drawings, an embodiment of the present invention will be detailed in the following. Initially, the configuration of the image forming system embodied in the present invention will be detailed in the following.

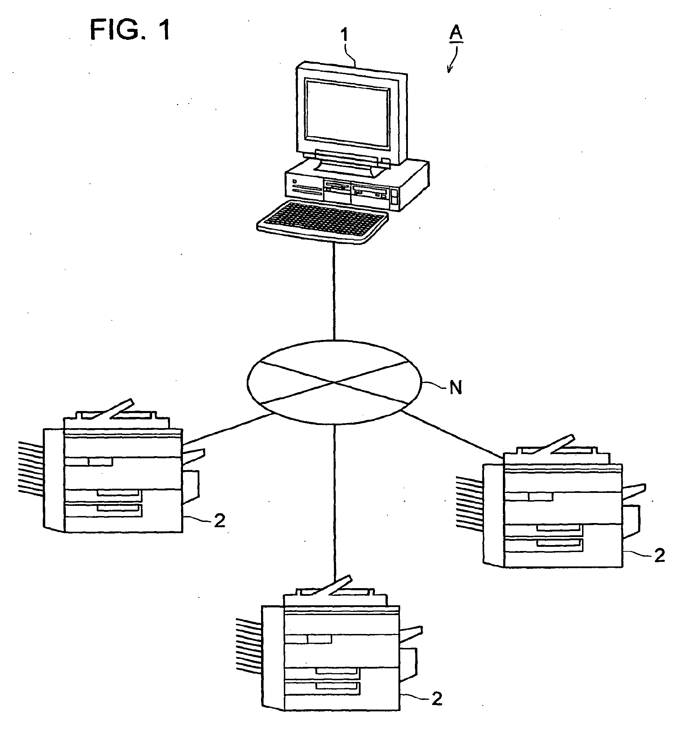

Fig. 1 shows a configuration of an image forming system A, embodied in the present invention.

As shown in Fig. 1, the image forming system A includes an operating apparatus 1 and image forming apparatus 2, which are coupled to each other through network N so as to make it possible to communicate with each other. Incidentally, although Fig. 1 shows an example in which one set of operating apparatus 1 and three sets of image forming apparatus 2 are coupled to each other, a number of sets for each apparatus is not limited to that shown in this embodiment.

The objective function of the operating apparatus 1 is to conduct a remote controlling operation for the image forming apparatus 2. For instance, when the image forming apparatus 2 implements a print processing under the remote controlling operation of the operating apparatus 1, the operating apparatus 1 converts the various kinds of setting information and the image data, which are set at the time of printing, into the other data based on the printer descriptive language being processable for the image forming apparatus 2, and then, sends them to the image forming apparatus 2. Software called the "printer driver" is employed for implementing the data converting operation mentioned in the above. For this purpose, for instance, a personal computer of general purpose would be applicable as the operating apparatus 1 having the "printer driver".

The image forming apparatus 2 has both an image forming function for forming an image onto a recording medium and a post-processing function for applying the punch processing, the staple processing, the fold processing, a cut processing, etc., to the recording mediums on which the images are formed, so as to conduct the processing in response to the various kinds of command signals sent from an operating section equipped in the image forming apparatus proper or transmitted from the operating apparatus 1.

The network N can be defined as the LAN (Local Area Network) or the WAN (Wide Area network). In addition, the configuration that includes at least one of the telephone line network, the ISDN (Integrated Service Digital Network), the broad band communication line network, the exclusive line, the mobile site communication network, the communication satellite network, the CATV (Community Antenna Television) network, the optical communication network, the wireless communication network, etc., and the service provider for coupling these network, is also applicable as the network N.

At first, the operating apparatus 1 will be detailed in the following.

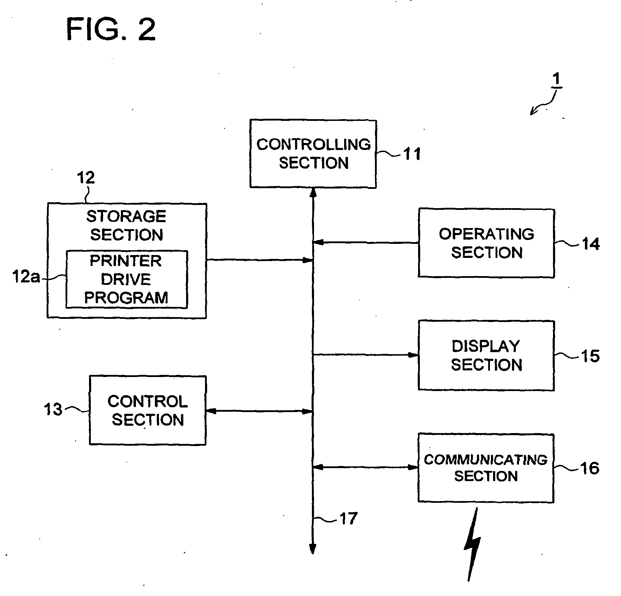

Fig. 2 shows an internal configuration of the operating apparatus 1.

As shown in Fig. 2, the operating apparatus 1 is provided with a controlling section 11, a storage section 12, a RAM 13 (Random Access Memory), an operating section 14, display section 15, a communicating section 16, etc., which are communicably coupled to each other through a bus 17, etc.

The controlling section 11, which is provided with a CPU (Central Processing Unit), etc., develops a system program, various kinds of control program, various kinds of data, etc., into the RAM 13, in order to totally control the whole operations to be conducted in the operating apparatus 1 on the basis of the cooperate actions between these program and the data. Further, the controlling section 11 implements the various kinds of processing according to the program developed in the RAM 13, and the results of the processing are not only stored in the RAM 13, but also displayed on the display section 15. Then, the results of the processing stored in the RAM 13 are further stored into a predetermined storing area of the storage section 12.

Further, the controlling section 11 conducts the print controlling operation, etc., based on the cooperate actions between an application software program stored in the storage section 12, a printer drive program 12a for activating the printer driver and the various kinds of data, and then, stores the results of the processing into the RAM 13, while displays them on the display section 15.

The storage section 12 is provided with nonvolatile storage mediums, such as a ROM (Read Only Memory), a HDD (Hard Disk Drive), etc., in which the system program to be executed by the controlling section 11, the various kinds of controlling program, the various kinds of application program, the data in respect to the printer drive program 12a and programs related to the printer drive program 12a, etc., are stored.

The RAM 13 forms a working area in which the various kinds of programs to be executed by the controlling section 11 and the data related to those programs, in it.

The operating section 14 is provided with a keyboard constituted by various kinds of keys, such as numerical keys, character keys, cursor moving keys, function keys, etc., and a pointing device, such as a mouse, etc. The operating section 14 outputs push down signals generated by the keyboard and operating signals generated by the mouse to the controlling section 11 as the input signals.

The display section 15, which is provided with a LCD (Liquid Crystal Display), etc., displays various kinds of setting screens on the displaying screen according to the display signals inputted from the controlling section 11.

The communicating section 16, which is provided with various kinds of interface devices, such as a network interface card, a MODEM (Modulator-Demodulator), a USB (Universal Serial Bus), etc., serves as a communication device for bilaterally communicating information with the external devices residing on the network N.

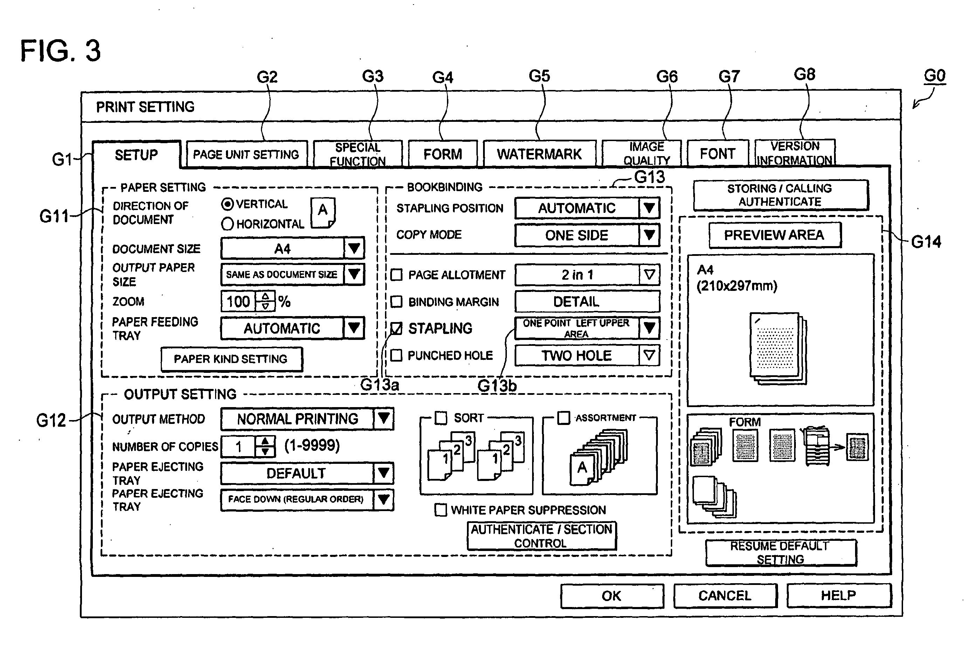

Fig. 3, Fig. 4 and Fig. 5 show examples of setting screens to be displayed on the displaying screen of the display section 15. Each of the setting screens is utilized for instructing various kinds of setting conditions applied to the print processing, when the operating apparatus 1 activates the printer driver in order to make the image forming apparatus 2 implement the print processing.

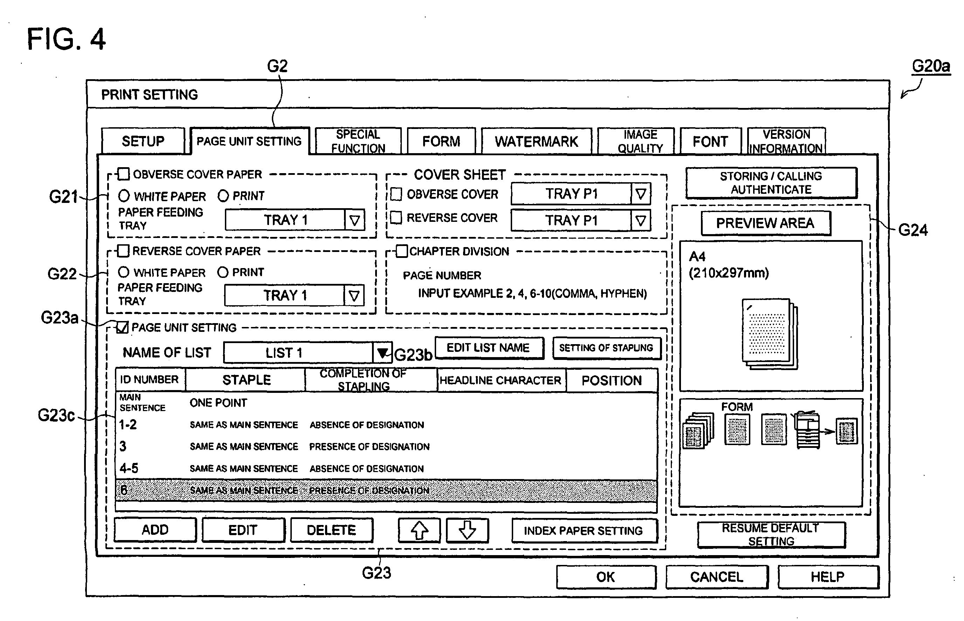

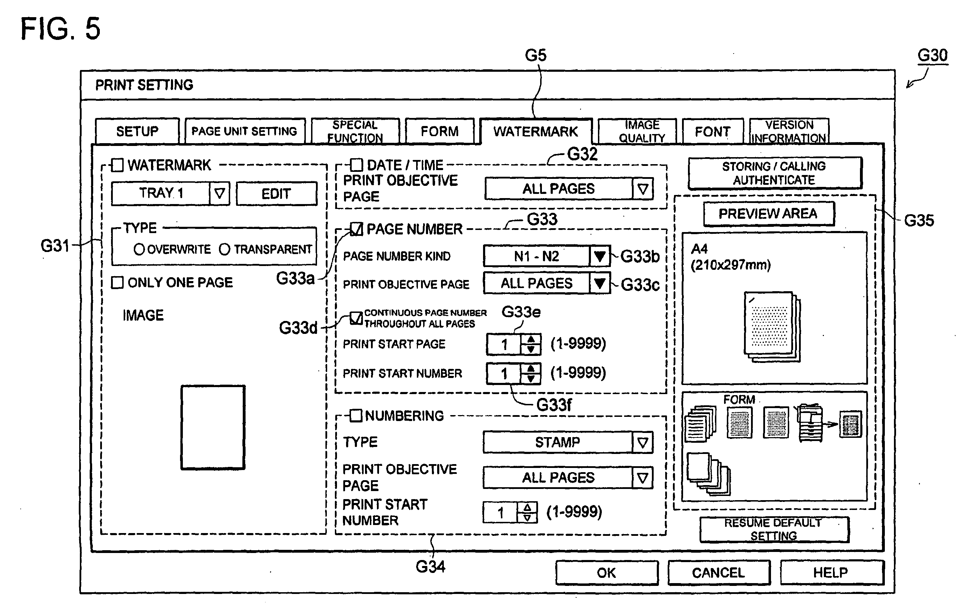

Fig. 3 shows a setup screen G0, Fig. 4 shows a page unit setting screen G20a, and Fig. 5 shows a watermark setting screen G30.

The setup screen G0 shown in Fig. 3 includes a paper setting area G11, an output setting area G12, a binding setting area G13, a setup index G1 including a preview area G14, a page unit setting index G2 for changing the screen to the page unit setting screen, a special screen index G3 for changing the screen to the special function setting screen, a form index G4 for changing the screen to the form setting screen, a watermark index G5 for changing the screen to the watermark setting screen, an image quality index G6 for changing the screen to the image quality setting screen, a font index G7 for changing the screen to the font setting screen, a version index G8 for changing the screen to the version confirming screen which displays the revision of the printer driver, etc.

The binding setting area G13 includes a binding position setting button, a copy mode setting button, a page allotment check box for setting whether or not a plurality of documents are put together by allotting them within one page, an intensive page setting button for setting a number of pages to be put together when the page allotment check box is checked, a binding margin check box for setting whether or not a binding margin should be set at arbitral value, a binding margin setting button to display a screen for setting detailed information in regard to the binding margin, such as a width of the binding margin, a position of the image, etc., when the binding margin check box is checked, a staple check box G13a for setting whether or not staple processing is applied, a staple setting button G13b for setting a kind of stapling mode when the staple check box G13a is checked, etc.

In the page unit setting screen G20a shown in Fig. 4, the page unit setting index G2, which includes an obverse cover page setting area G21, a reverse cover page setting area G22, a page unit setting area G23, a preview area G24, etc., is displayed.

Incidentally, in the embodiment of the present invention, by checking a page unit setting check box G23a, it is possible to designate a booklet dividing mode in which recording mediums to which a post-processing is applied and other recording mediums to which a post-processing is not applied are intermingled.

The page unit setting area G23 includes the page unit setting check box G23a for setting whether or not various kinds of setting conditions are set for every unit of document page, a condition selecting button G23b for selecting/setting specific setting conditions desired by the user from the various kinds of setting conditions determined in advance when the page unit setting check box G23a is checked, a page condition synoptic table area G23c in which individual conditions are displayed for every document page when the page unit setting check box G23a is checked, etc.

In the page condition synoptic table area G23c, the individual conditions, such as an identifying number (hereinafter, referred to as ID number) for identifying the document page, and setting of kinds of post-processing corresponding to the ID number (here, indicating presence or absence of the staple processing and the stapling position), a designation of whether or not the post-processing to be set is at a final position of the document pages (a dividing position) (here, indicating a staple finalizing position), etc., are changeably displayed. In the example shown in Fig. 4, with respect to the document including six pages, each of the conditions is individually established. For instance, with respect to the document pages having ID numbers of 1, 2, 4 and 5, setting conditions are established as one point stapling and no designation for the staple finalizing position, while with respect to the document pages having ID numbers of 3 and 6, setting conditions are established as one point stapling and a presence of the designated staple finalizing position. Accordingly, two bunches of recording mediums, in one of which images of 1-3 document pages are formed and the staple processing is applied, and in another one of which images of document pages having ID numbers of 4-6 and the staple processing is applied, would be formed.

Incidentally, the individual conditions are not limited to the kinds of post-processing and the dividing position. It is also applicable that the individual conditions includes a copy mode, a paper feeding tray, etc.

In the preview area G24, a preview image of the document pages selected in the page condition synoptic table area G23c is displayed.

The watermark setting screen G30 shown in Fig. 5 includes a watermark setting area G31, a page number setting area G33, a numbering setting area G34, and a preview area G35.

In the page number setting area G33, a page number setting check box G33a for designating/setting whether or not page numbers should be printed on the recording mediums on which images are formed based on image data, a page number kind setting button G33b for setting a kind of page number when the page number setting check box G33a is checked, a print objective page setting button G33c for setting document pages on which the page numbers are to be printed, a serial number setting check box G33d for setting whether or not page numbers should be printed throughout the whole document pages as continuous serial numbers, a page print start setting button G33e for setting a specific document pages from which the page printing operation starts, a start number setting button G33f for setting a start number of the page numbers, etc., are displayed.

In the preview area G35, a preview image of the recording mediums set in the watermark setting screen G30 is displayed. When the page number setting check box G33a is checked, it is preferable that a preview image of the page numbers to be printed onto the recording mediums is displayed.

As mentioned in the foregoing, by employing the various kinds of setting screens to be executed by the printer driver, the functions, as the post-processing division setting input section (the page unit setting area G23) that accepts the designation of the document page division being an implementation object of the post-processing, the start number selection input section (the serial number setting check box G33d) that accepts the setting instruction for whether or not the page numbers are set at continuous serial numbers, a start number of which is set at "1" for every division of the document pages, and the page number kind selecting section (the page number kind setting button G33b) that accepts the selecting instruction of the page number kind, are realized.

Next, the image forming apparatus 2 will be detailed in the following.

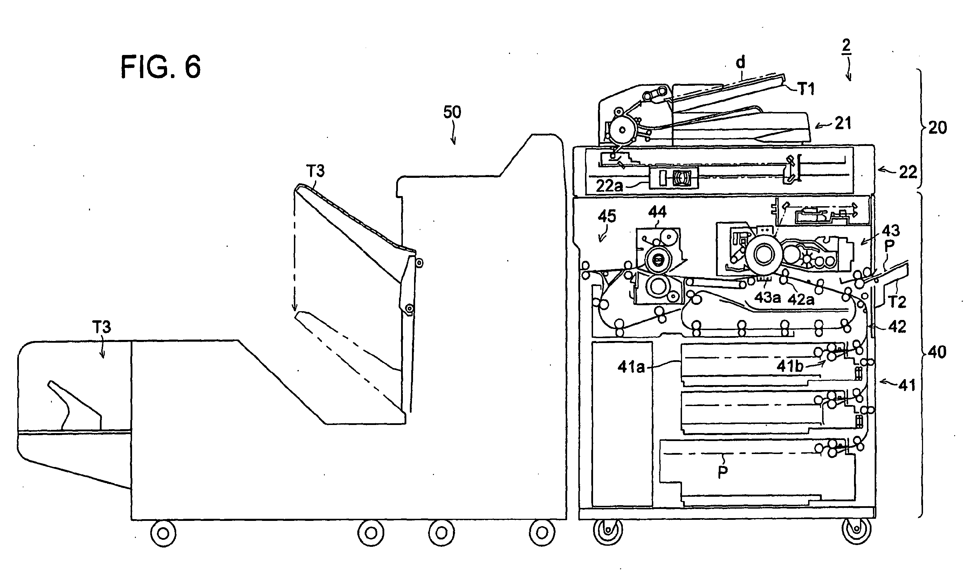

Fig. 6 shows a cross-sectional view of the image forming apparatus 2.

The image forming apparatus 2 serves as a compound digital image forming apparatus that is provided with an image forming unit having functions of reading an image residing on the document, forming the read image onto a recording medium P, such as a paper or the like, serving as an processing objective paper, and forming an image onto a recording medium P, based on image data received from the operating apparatus 1, etc., and a post-processing unit for applying post-processing, such as the punch processing, the staple processing, the fold processing, the cut processing, etc., to the recording mediums on which the images are formed. As shown in Fig. 6, the image forming apparatus 2 is constituted by an image reading section 20, a printing section 40 and a post-processing section 50.

The image reading section 20 is provided with an automatic document feeding section 21 called ADF (Auto Document Feeder) and a reading section 22. A document D stacked on a document tray T1 of the automatic document feeding section 21 is conveyed to a contact grass disposed at a reading position of the reading section 22. Images residing on an obverse side and/or a reverse side of the document D are scanned by the optical system of the reading section 22 so that the images on the document D are read by the CCD (Charge Coupled Device) image sensor 22a. Hereinafter, the term of "images" is not limited to graphic patterns, photographic images, or the like, which are based on the image data, but includes characters, symbols, or the like, which are based on text data, etc.

The analogue image signals read by the reading section 22 are outputted to an image controlling section, detailed later. Then, the image controlling section applies the A/D (analogue to digital) conversion processing to the analogue image signals so as to generate the digital print data, which are outputted to the printing section 40.

The printing section 40 is constituted by a paper feeding section 41, a paper feeding conveyance section 42, a image forming section 43, a fixing section 44 and an ejecting section 45, in order to conduct an electro-photographic image forming operation on the basis of the digital print data inputted from the image controlling section.

The paper feeding section 41 is provided with a plurality of paper feeding cassettes 41a, a paper feeding roller 41b, a manual feeding tray T2, etc. Each of the paper feeding cassettes 41a accommodates the recording medium P discriminated for every one of the paper feeding cassettes 41a in advance according to sizes and kinds of them. The paper feeding roller 41b picks up and conveys the recording medium P one by one from the up-most one of the accommodated recording mediums to the paper feeding conveyance section 42. The manual feeding tray T2 allows the user to stack any one of various kinds of recording mediums P as needed on it, and the paper feeding roller picks up and conveys the recording medium P one by one from the up-most one of the stacked recording mediums to the paper feeding conveyance section 42.

The paper feeding conveyance section 42 further conveys the recording medium P, conveyed from the paper feeding cassettes 41a or the manual feeding tray T2, to a transfer device 43a through a plurality of intermediate rollers, a registration roller 42a, etc.

Further, the paper feeding conveyance section 42 conveys the recording medium P, for which one-side image forming operation is already completed, to an automatic both-sided paper feeding path by means of a conveyance path switchover plate, and then, again conveys it to the transfer device 43a through the plurality of intermediate rollers, the registration roller 42a.

The image forming section 43 is provided with an exposing unit that includes a photoreceptor drum, a charging device, a laser emitting device for emitting a laser beam modulated by the image data and a polygon mirror for scanning the laser beam in a main-scanning direction, a developing unit, the transfer device 43a and a cleaning unit. Concretely speaking, an electrostatic latent image is formed on the photoreceptor drum charged by the charging device by irradiating the laser beam emitted from the laser emitting device onto the photoreceptor drum. Then, in the developing unit, the electrostatic latent image is developed by attaching charged toner onto the photoreceptor drum having the electrostatic latent image. Further, in the transfer device 43a, the toner image formed on the photoreceptor drum by means of the developing unit is transferred onto the recording medium P. Finally, after the toner image is transferred onto the recording medium P, the cleaning unit removes the residual charge and the residual toner residing on the surface of the photoreceptor drum.

The fixing section 44 fixes the toner image, transferred onto the recording medium P conveyed by the paper feeding conveyance section 42, onto the recording medium P by applying heat and pressure to the toner image. Then, after the fixing operation is completed, the ejecting section 45 ejects the recording medium P from an ejecting outlet by clipping it between a pair of rollers, so as to output it to the post-processing section 50.

The post-processing section 50 is provided with a sorting section for applying a sort processing to the recording mediums on which the toner images are formed, a punching unit for conducting a punch processing to punch a hole, a stapling unit for conducting a staple processing to staple a bunch of the recording mediums, a folding unit for conducting a fold processing, a cutting unit for conducting cut processing, etc. The recording mediums, onto which various kinds of post-processing are either applied or not applied, are ejected on an ejecting tray T3.

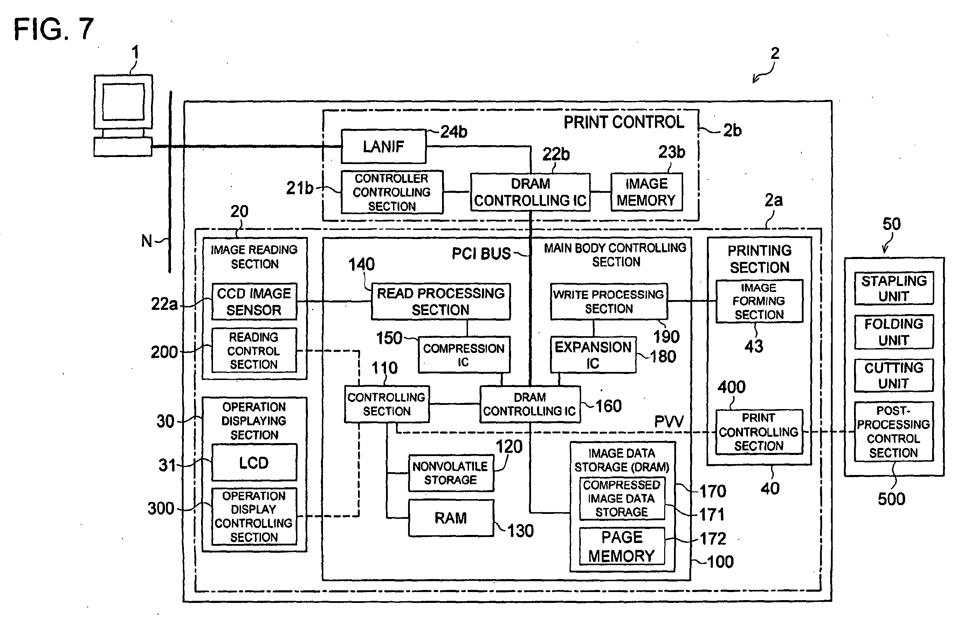

Fig. 7 shows a block diagram of a controlling system of the image forming apparatus 2.

As shown in Fig. 7, the image forming apparatus 2 is constituted by a main body section 2a, a printer controller 2b, and a post-processing section 50 coupled to the main body section 2a. The image forming apparatus 2 is coupled to the operating apparatus 1 through a LANIF 24b (Local Area Network Interface) equipped in the printer controller 2b so as to bilaterally communicate information between them.

The main body section 2a includes the image reading section 20, an operation displaying section 30, the printing section 40 and a main body controlling section 100. Incidentally, as for the blocks same as those already described in Fig. 6, the reference numbers of them are the same as those in Fig. 6, and explanations for them will be omitted.

The main body controlling section 100 is constituted by a controlling section 110, a nonvolatile storage 120, a RAM 130 (Random Access Memory), a read processing section 140, a compression IC 150, a DRAM (Dynamic Random Access Memory) controlling IC 160, an image data storage 170, an expansion IC 180 and a write processing section 190.

The controlling section 110 includes a CPU, etc., so as to intensively control various kinds of operations to be performed by various sections included in the image forming apparatus 2 based on the various kinds of programs stored in the nonvolatile storage 120. For instance, in response to command signals inputted from the operation displaying section 30 or the operating apparatus 1, the controlling section 110 conducts a changing operation between a copy mode, a printer mode and a scanner mode, and conducts a controlling operation for any one of a copying, a printing, a reading of image data, etc., by retrieving a suitable operation program stored in the nonvolatile storage 120.

Further, the controlling section 110 transmits an image writing signal PVV to a print controlling section 400 in the printing section 40. An ON state of the image writing signal PVV is defined as a state that the toner image formed on the photoreceptor drum is transferred onto the recording medium P in the transfer device 43a, while an OFF state of the image writing signal PVV is defined as a state that the toner image formed on the photoreceptor drum is not transferred onto the recording medium P in the transfer device 43a.

Still further, in order to achieve the subject of the present embodiment, the controlling section 110 reads out a page number setting program, embodied in the present invention, from the nonvolatile storage 120 and job data from the ROM 130, to control the setting operation of the page numbers to be printed on the recording mediums P on the basis of the cooperate operation of the page number setting program and the job data. When the controlling section 110 receives an instruction for printing the page numbers, divisions of the document pages being an implementation object of the post-processing and an instruction not to make the page numbers, to be printed on the recording mediums P, serial numbers continuing throughout the whole document pages from the operation displaying section 30 or the operating apparatus 1, the controlling section 110 realizes the function of setting the start page number at "1" for every division of the document pages as the page number setting control section. For instance, in the case that the start number of the continuous serial numbers is set at "1" for every division of the document pages, the page unit setting check box G23a is checked, the staple stop position is designated in the page condition synoptic table area G23c, the page number setting check box G33a is checked, and further, the serial number setting check box G33d is not checked.

Incidentally, when the instruction for printing the page numbers and the designation of the booklet dividing mode are inputted into the controlling section 110 from the operation displaying section 30 and the operating apparatus 1, namely, when the page unit setting check box G23a is checked in the present embodiment, it is applicable that the controlling section 110 sets the start number at "1" for every division.

Further, when a page number kind (N1 - N2), including a chapter number (N1) for discriminating the division of the document pages and a chapter page number (N2) for discriminating the page number of the storage medium in each division of the document pages, is selected by using the page number kind setting button G33b, the controlling section 110 sets the chapter number (N1) for every division of the document pages and sets the chapter page number (N2) as the continuous serial numbers in which the start number is set at "1" for every division.

As mentioned in the above, according to the embodiment of the present invention, since the chapter number for discriminating the division of the document pages can be printed, and the start number of the page numbers of the recording mediums in each division of the document pages can be started from "1", it becomes possible to clarify the divisions of the document pages and to attach a unification to the page numbers over the whole document.

Other than the various kinds of processing programs and data in respect to the image forming operation, a page number setting program, data for setting the post-processing to be applied to the recording medium P on which the images are formed, for the post-processing section 50 through the printing section 40, other data processed by various kinds of programs, etc. are stored in the nonvolatile storage 120.

The RAM 130 provides a working storage area for temporarily storing the various kinds of programs to be executed by the controlling section 110, the data in regard to those programs, the job data, etc.

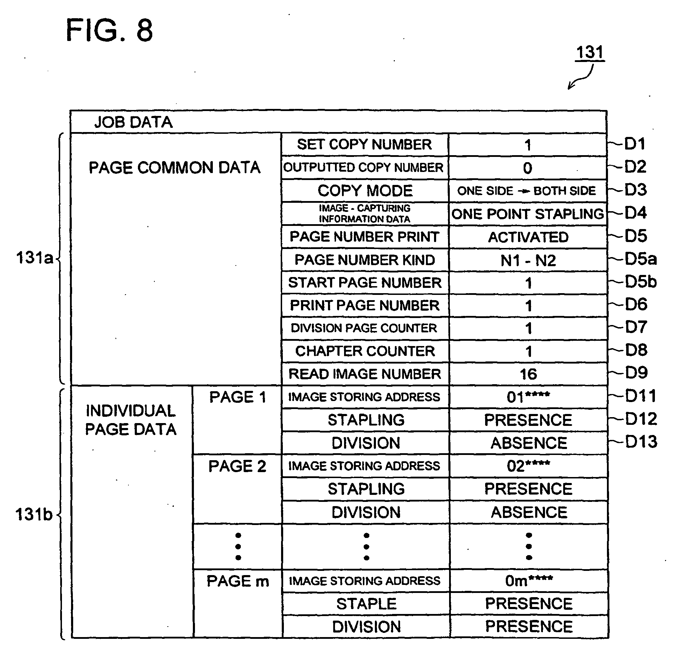

Fig. 8 shows an example of the job data.

As shown in Fig. 8, job data 131 is constituted by data common to the document pages (referred to as page common data 131a) and data for every document page (referred to as individual page data 131b).

The page common data 131a includes various kinds of setting conditions established on the basis of the instruction signals inputted from the operating apparatus 1 or the operation displaying section 30 and the data representing the operating state of the image-forming operation and the post-processing operation.

For instance, the page common data 131a includes a set copy number D1 representing a number of copies of the recording mediums P to be outputted, an outputted copy number D2 representing a counted value of a number of the copies currently outputted, a copy mode D3 representing a paper side or sides on which images are to be formed, namely, from one-side to both-sides, from both-sides to one-sides, etc., a post-processing mode D4 representing a kinds of post-processing mode set in advance (such as presence or absence of the staple processing, a position of stapling, etc.), a page number print D5 representing presence or absence of the page number printing operation (namely, whether or not the page number setting check box G33a is checked), a page number kind D5a representing a kind of page number to be set when the page number print D5 is present, a start page number D5b representing whether or not the serial number setting check box G33d is checked (for instance, representing "automatic" when checked, while representing "1" when not checked), a print page number D6 representing the ID number of the individual image data corresponding to the document page to which the image forming operation is to be applied, a division page counter D7 for counting the page numbers of the recording mediums in each division of the document pages, a chapter counter D8 representing an order of the division of the document pages to which the image forming operation is to be applied, within the whole document pages, a read image number D9 representing a total number "n" of the individual image data sets currently read, etc.

In the individual page data, the individual image data, corresponding to each of the document pages already read, have the attached ID number (for instance, page 1, page 2 --) and are individually stored. The individual image data is constituted by a image storing address D11 representing an address on the image data storage 170 in which the individual image data concerned are stored, post-processing information D12 representing the post-processing (here, presence or absence of the staple processing) for each of the document pages set by the page condition synoptic table area G23c (namely, each of individual image data sets), division information D13 representing a divided position (here, presence or absence of the designation of staple finalizing position) for each of the document pages (namely, each of individual image data sets).

The read processing section 140 applies various kinds of processing, such as the analogue processing, the A/D conversion processing, the shade processing, etc., to the analogue image signals inputted from a reading control section 200 of the image reading section 20, so as to generate digital image data. Then, the digital image data generated by the read processing section 140 are outputted to the compression IC 150.

The compression IC 150 applies the compression processing to the digital image data inputted, and then, outputs the compressed image data to DRAM controlling IC 160.

Based on the command signals sent from the controlling section 110, the DRAM controlling IC 160 controls the compression processing of the digital image data performed by the compression IC 150 and the expansion processing of the compressed image data performed by the expansion IC 180, and at the same time, also controls the input/output operations of the image data from/to the image data storage 170. For instance, when receiving the command for storing the analogue signals read by the image reading section 20, the DRAM controlling IC 160 controls the compression IC 150 so as to implement the compression processing of the digital image data inputted from the read processing section 140 and to store the compressed image data into a compressed image data storage 171 of the image data storage 170. Further, when receiving the command for outputting the print image based on the compressed image data stored in the compressed image data storage 171, the DRAM controlling IC 160 reads out the compressed image data from the compressed image data storage 171, and then, applies the expansion processing to the compressed image data to generate non-compressed image data, and further, stores the non-compressed image data into a page memory 172. Still further, when receiving the command for outputting the print image based on the non-compressed image data stored in the page memory 172, the DRAM controlling IC 160 reads out the non-compressed image data from the page memory 172 to output them to the write processing section 190.

The image data storage 170 is provided with the compressed image data storage 171 constituted by DRAMs (Dynamic RAMs) and the page memory 172. The compressed image data storage 171 serves as storage for storing the compressed image data, while the page memory 172 serves as storage for temporarily storing the non-compressed image data representing a print objective image before printing.

The expansion IC 180 applies the expansion processing to the compressed image data inputted.

The write processing section 190 generates print data for forming an image based on the non-compressed image data inputted from the DRAM controlling IC 160 so as to output the print data to the printing section 40.

The image reading section 20 is constituted by the CCD image sensor 22a, the reading control section 200, the automatic document feeding section 21 shown in Fig. 6, the reading section 22 shown in Fig. 6, etc. The reading control section 200 controls the automatic document feeding section 21, the reading section 22, etc. so as to conduct the exposure scanning operation for the surface of the document, residing on the contact glass, to read the image by photo-electronically converting the reflected light by means of the CCD image sensor 22a. The analogue image signals read by the CCD image sensor 22a is outputted to the read processing section 140 of the main body controlling section 100.

The operation displaying section 30 is constituted by a LCD 31 (Liquid Crystal Display), an operation display controlling section 300 and operation keys (not shown in the drawings). A touch panel is mounted on the LCD 31 in such a manner that the touch panel covers the LCD 31. In response to the display signals inputted from the controlling section 110, the operation display controlling section 300 displays each of various kinds of setting screens for inputting various kinds of setting conditions and various kinds of processing results on the LCD 31. Further, the operation display controlling section 300 outputs operational signals, inputted from the operation keys and/or the touch panel, to the controlling section 110.

By displaying a screen that includes items substantially the same as those in the setting screen shown in Fig. 3 on the LCD 31, the operation displaying section 30 realizes the functions as a post-processing division setting input section for accepting the designation of divisions of the document pages being an object of the post-processing, a start number selection input section for accepting the designation of setting whether or not the page number should be a continuous serial number in which the start number is set at "1" for every division of the document pages and a page number kind selecting section for accepting the designation of selecting a kind of the page number.

The printing section 40 is constituted by the various sections in respect to the print outputting operation, such as the image forming section 43 shown in Fig. 6, etc., and the print controlling section 400. In response to command signals sent from the controlling section 110, the print controlling section 400 controls the various sections included in the printing section 40, such as the image forming section 43, etc., so as to form the image on the recording medium P, based on the print data inputted from the write processing section 190, and at the same time, outputs instruction signals for operating the sections, included in the post-processing section 50, to a post-processing control section 500.

Next, each of the sections included in the printer controller 2b will be detailed in the following. When the image forming apparatus 2 is employed as the network printer, the printer controller 2b conducts management/controlling operations of the print job inputted from the operating apparatus 1 to the image forming apparatus 2, both of which are coupled to the network N. Accordingly, the printer controller 2b has functions of receiving the print objective data from the image forming apparatus 2 and assigning the concerned data as the print data, corresponding to the operating status of the image forming apparatus 2.

The printer controller 2b is constituted by a controller controlling section 21b, a DRAM controlling IC 22b, an image memory 23b, a LANIF 24b.

The controller controlling section 21b totally controls operations of the various sections include in the printer controller 2b, and, corresponding to the operating status of the image forming apparatus 2, transmits the data inputted from the operating apparatus 1 to the main body section 2a as the job, through the LANIF 24b.

The DRAM controlling IC 22b controls an operation for storing the data received from the LANIF 24b into the image memory 23b and an operation for reading the data from the image memory 23b. Further, the DRAM controlling IC 22b is coupled to the DRAM controlling IC 160 of the main body controlling section 100 through the PCI (Peripheral Components Interconnect) bus, so as to read out the print objective data from the image memory 23b to output them to the DRAM controlling IC 160.

The image memory 23b is constituted by DRAMs in order to temporarily store the output data inputted.

The LANIF 24b serves as a communication interface for coupling the image forming apparatus 2 to the network N, such as a LAN including a NIC (Network Interface Card), etc., etc., to receive data from the operating apparatus 1. The received data are outputted to the DRAM controlling IC 22b.

The post-processing section 50 is equipped with a sorting unit, a punching unit, a stapling unit, a folding unit, a cutting unit, conveyance members, including conveying rollers, etc., for conveying the recording medium to various kinds of post-processing units, etc., all of which are totally controlled by the post-processing control section 500.

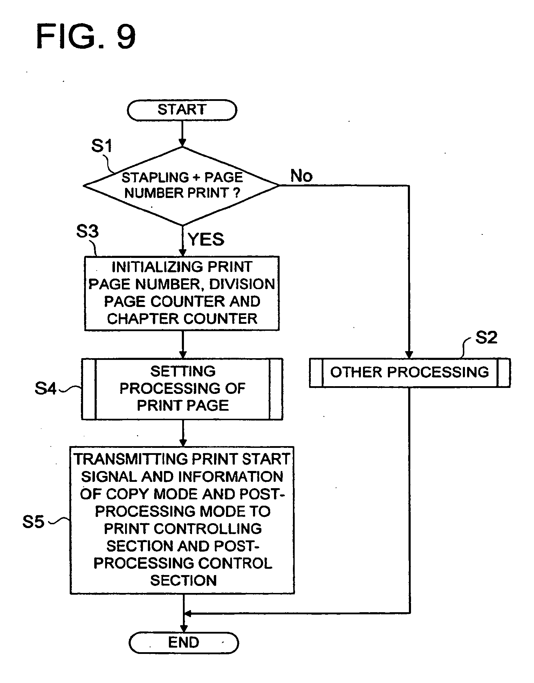

Next, the operations of the present embodiment will be detailed in the following. Figs. 9 - 11 show flowcharts of the page number setting processing conducted in the present embodiment. The flowcharts shown in Figs. 9 - 11 are to be performed in the controlling section 110.

Fig. 9 shows a flowchart of processing to be implemented at the starting time of the print processing.

Initially, at the time when the various kinds of setting conditions set by the operating apparatus 1 or the operation displaying section 30 and the image data are inputted into the controlling section 110 before the commencement of the print processing, the controlling section 110 stores the various kinds of setting conditions and the image data, inputted, into the RAM 130 as the job data, and at the same time, determines whether or not both the post-processing mode D4 and the page number print D5 are established (presence or absence of the setting of the stapling and the page printing), referring to the job data (Step S1).

When determining that both the post-processing mode D4 and the page number print D5 are not established (Step S1; No), the controlling section 110 implements various kinds of processing corresponding to other processing for which the post-processing mode D4 and the page number print D5 are not set, for instance, absence of the page printing, etc. (Step S2).

When determining that both the post-processing mode D4 and the page number print D5 are established (Step S1; Yes), the controlling section 110 initializes (sets to "1") the print page number D6 of the job data, the division page counter D7 and the chapter counter D8 (Step S3).

After completing Step S3, the controlling section 110 implements the print page setting processing for generating the print data directly representing the image to be formed on the recording medium (Step S4).

After completing the setting operation of the print page setting processing (after completing Step S4), the controlling section 110 transmits the copy mode D3, the post-processing mode D4 and the print start signal to the print controlling section 400 and the post-processing control section 500 (Step S5).

After completing Step S5, the controlling section 110 finalizes the processing to be conducted at the stating time of the print processing.

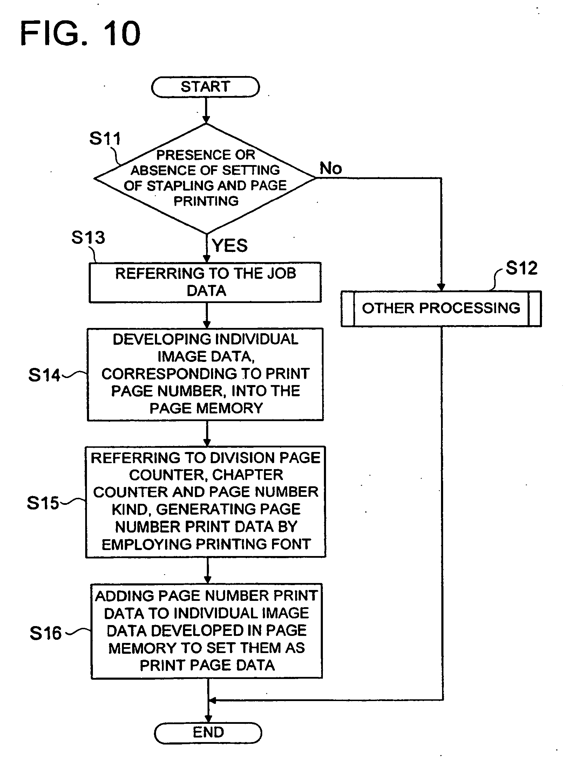

Fig. 10 shows a flowchart of the print page setting processing to be conducted in Step 4 shown in Fig. 9. The print page setting processing is to generate and establish print page data, which directly represent the image to be formed on the recording medium, by adjusting the individual image data corresponding to each of the document pages according to the job data established.

Referring to the job data, the controlling section 110 determines whether or not both the post-processing mode D4 and the page number print D5 are established (presence or absence of the setting of the stapling and the page printing) (Step S11). When determining that both the post-processing mode D4 and the page number print D5 are not established (Step S11; No), the controlling section 110 implements other processing for which the post-processing mode D4 and the page number print D5 are not set (Step S12).

When determining that both the post-processing mode D4 and the page number print D5 are established (Step S11; Yes), referring to the job data (Step S13), the controlling section 110 develops the individual image data stored in the image storing address D11, corresponding to the ID number of the document page indicated by the print page number D6, into the page memory 172 (Step S14).

After developing the individual image data into the page memory 172, referring to the division page counter D7, the chapter counter D8 and the page number kind D5a, the controlling section 110 generates the page number print data by employing a predetermined printing font (Step S15).

After generating the page number print data (after completing Step S15), the controlling section 110 adds the page number print data to the individual image data developed in the page memory 172 to set them as the print page data (Step S16), and then, finalizes the print page setting processing.

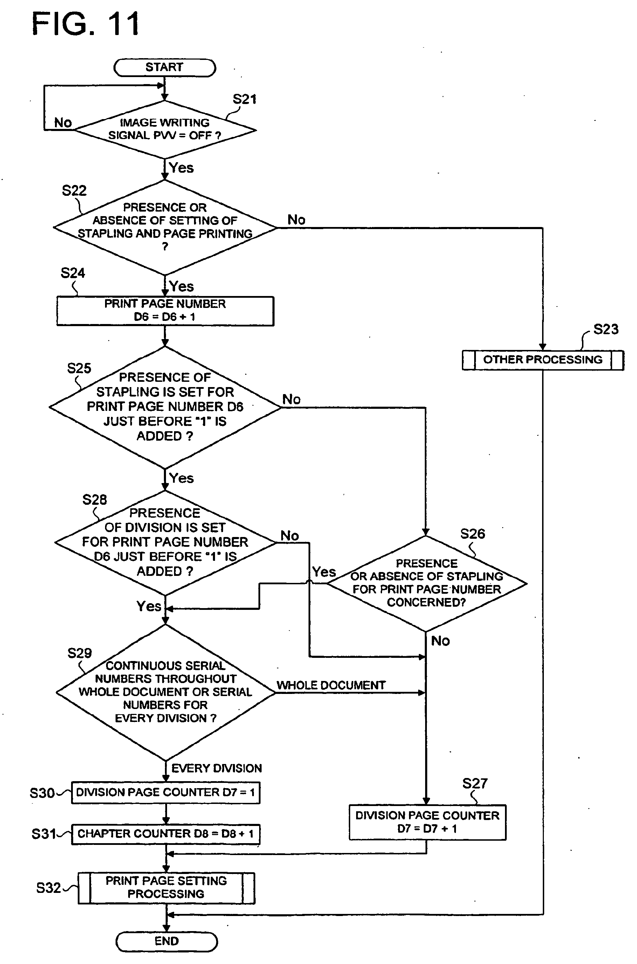

Fig. 11 shows a flowchart of processing to be implemented when the image writing signal PVV is changed to OFF state from ON state after the print processing is commenced.

At first, the controlling section 110 determines whether or not the image writing signal PW is changed to OFF state from ON state (Step S21). When determining that the image writing signal PVV is not changed to OFF state (Step S21; No), the controlling section 110 waits until the image writing signal PVV is changed to OFF state.

When determining that the image writing signal PVV is changed to OFF state (Step S21; Yes), referring to the job data, the controlling section 110 determines whether or not both the post-processing mode D4 and the page number print D5 are established (presence or absence of the setting of the stapling and the page printing) (Step S22). When determining that both the post-processing mode D4 and the page number print D5 are not established (Step S22; No), the controlling section 110 implements other processing for which the post-processing mode D4 and the page number print D5 are not set (Step S23).

When determining that both the post-processing mode D4 and the page number print D5 are established (Step S22; Yes), the controlling section 110 adds "1" to the print page number D6 (Step S24).

The controlling section 110 determines whether the post-processing information D12, corresponding to the ID number of the document page indicated by the print page number D6 just before "1" is added to print page number D6, indicates presence of the post-processing (presence of the stapling) or absence of it (Step S25).

When determining that the post-processing information D12, corresponding to the ID number of the document page indicated by the print page number D6 just before "1" is added to print page number D6, indicates absence of the post-processing (absence of the stapling) (Step S25; No), the controlling section 110 determining whether the post-processing information D12, corresponding to the ID number of the document page indicated by the print page number D6 just after "1" is added to print page number D6, indicates presence of the post-processing (presence of the stapling) or absence of it (Step S26).

When determining that the post-processing information D12, corresponding to the ID number of the document page indicated by the print page number D6, indicates absence of the post-processing (absence of the stapling) (Step S26; No), the controlling section 110 adds "1" to the division page counter D7 (Step S27), and proceeds to Step S32.

When determining that the post-processing information D12, corresponding to the ID number of the document page indicated by the print page number D6, indicates presence of the post-processing (presence of the stapling) (Step S26; Yes), the controlling section 110 proceeds to Step S29.

When determining that the post-processing information D12, corresponding to the ID number of the document page indicated by the print page number D6 just before "1" is added to print page number D6, indicates presence of the post-processing (presence of the stapling) (Step S25; Yes), the controlling section 110 determining whether the division information D13, corresponding to the ID number of the document page indicated by the print page number D6 just before "1" is added to print page number D6, is present or absent (Step S28).

When determining that the division information D13, corresponding to the ID number of the document page indicated by the print page number D6 just before "1" is added to print page number D6 (Step S28; No), is absent, the controlling section 110 proceeds to Step S27.

When determining that the division information D13, corresponding to the ID number of the document page indicated by the print page number D6 just before "1" is added to print page number D6 (Step S28; Yes), is present, the controlling section 110 determines whether or not the serial number setting check box G33d is checked, namely, whether or not the page numbers are printed as the continuous serial numbers throughout the whole document pages (Step S29).

When determining that the serial number setting check box G33d is checked, namely, determining that the page numbers should be printed as the continuous serial numbers throughout the whole document pages (Step S29; Whole), the controlling section 110 proceeds to Step S27.

When determining that the serial number setting check box G33d is not checked, namely, determining that the page numbers should be printed as the continuous serial numbers for every division of the document pages (Step S29; Division), the controlling section 110 initializes (sets to "1") the print page number D6 of the job data and the division page counter D7 (Step S30), and adds "1" to the chapter counter D8 (Step S31).

After completing Step S2 or Step S31, the controlling section 110 implements the print page setting processing aforementioned (Step S32).

After implementing the print page setting processing (after completing Step S32), the controlling section 110 finalizes the processing to be implemented when the image reading signal SVV is changed to OFF state from ON state.

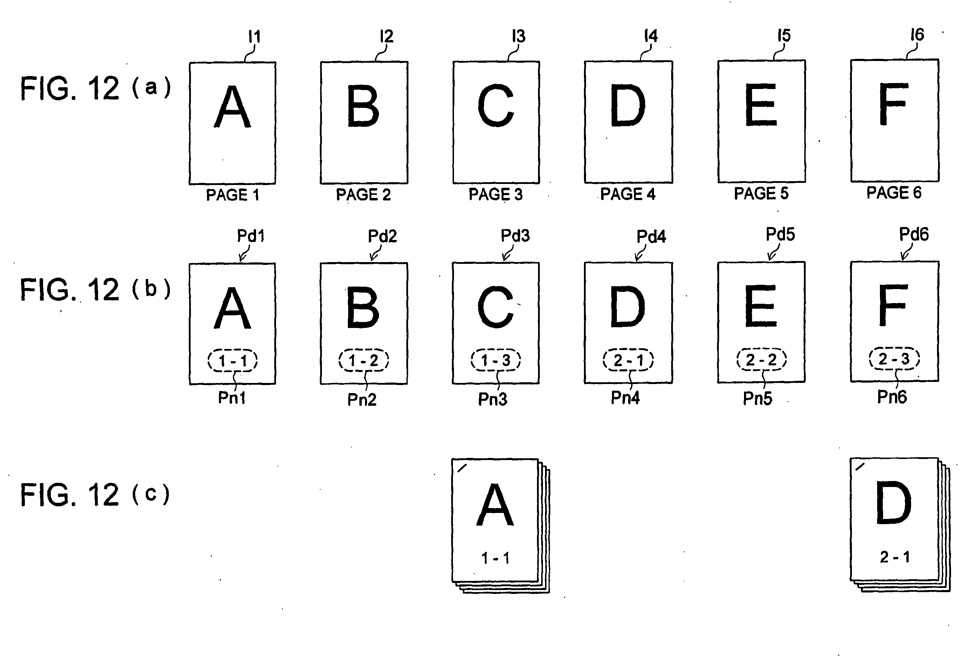

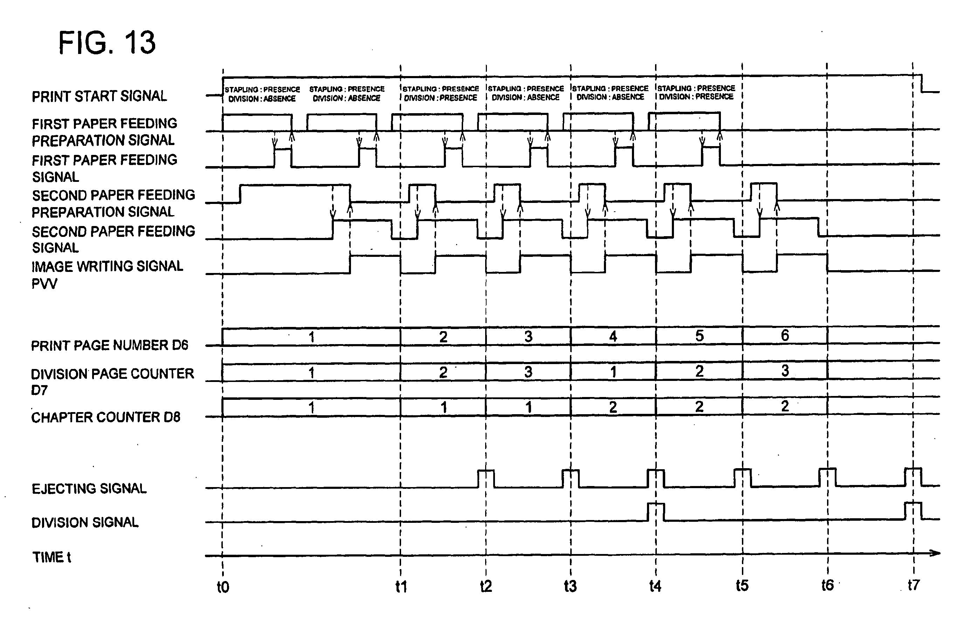

Fig. 12(a), Fig. 12(b) and Fig. 12(c) show exemplified illustrations of the print processing to be performed in the present embodiment, while Fig. 13 shows a time chart of the operations of the image forming apparatus 2, which implements the print processing shown in Figs. 12(a), 12(b), 12(c).

The print processing shown in Figs. 12(a), 12(b), 12(c) and Fig. 13 is an example in the case that, in the various kinds of setting screens shown in Figs. 3 - 5, the staple check box G13a is checked so as to apply the staple processing to one position located at a left-upper area, the page unit setting check box G23a is checked so as to process each of the document pages under the setting conditions indicated in the page condition synoptic table area G23c, the page number setting check box G33a is checked, the page number kind setting button G33b is set at N1 - N2, and the serial number setting check box G33d is not checked.

Fig. 12(a) shows image data including a plurality of individual image data sets generated by employing application software corresponding to the plurality of document pages, Fig. 12(b) shows print data including a plurality of print page data sets representing the images to be formed on the recording mediums by the image forming apparatus 2, and Fig. 12(c) shows bunches of the recording mediums to which the post-processing is already applied and which is ejected from the image forming apparatus 2.

The image data, shown in Fig. 12(a) and generated by the operating apparatus 1, includes the individual image data sets I1 - I6 corresponding to each of the document pages. When the image data are transmitted to the image forming apparatus 2 from the operating apparatus 1, the ID numbers (for instance, Page 1, Page 2 --) for discriminating each of the individual image data sets are attached one by one to the individual image data sets I1 - I6 in order of I1 to I6 so as to store them as the job data.

The print data, shown in Fig. 12(b), includes a plurality of print page data sets Pd1 - Pd6 in each of which the page number print data is added to the individual image data. For instance, the print page data sets Pd1 is generated as the data in which page number print data Pn1 is added to the individual image data sets I1.

The page number print data sets shown in Fig. 12(b) are examples in the case that the staple finalizing positions are respectively set at the print page data sets Pd3 and Pd6, the page number kind is set at N1 - N2 which indicates the chapter number (N1) for discriminating the divisions of the document pages and the chapter page number (N2) for discriminating the page number of the storage medium in each division of the document pages. By applying the present embodiment, the common chapter number (N1) is printed for every division, and the chapter page number (N2), serving as a serial number in which the start page number is set at "1", is printed.

The bunches of recording mediums shown in Fig. 12(c) are illustrative examples in the case that the recording mediums having the images of the print page data sets Pd1 - Pd3 are stapled as a bunch of recording mediums, while the recording mediums having the images of the print page data sets Pd4 - Pd6 are stapled as another bunch of recording mediums.

Next, an example of the time chart of the operations performed by the image forming apparatus 2, shown in Fig. 13, will be detailed in the following.

The first paper feeding preparation signal includes information of the print page data, for instance, presence or absence of the staple processing, presence or absence of the divisions, etc., and are outputted to the print controlling section 400 and the post-processing control section 500 through the print controlling section 400 from the controlling section 110. The first paper feeding signal is an operational signal for conveying the recording medium P to the registration roller 42a from the paper feeding cassettes 41a. The ON state of the first paper feeding signal indicates an active state of conveying operation. Further, in response to the first paper feeding preparation signal, the print controlling section 400 outputs the first paper feeding signal to the controlling section 110.

The second paper feeding preparation signal indicates a state of enabling or disabling the writing operation of the print page data. The ON state of the second paper feeding preparation signal indicates a state that a preparation for writing a next image is completed, while the OFF state indicates a state that the writing operation is in a mid-course of the preparation. The controlling section 110 outputs the second paper feeding preparation signal to the print controlling section 400. The second paper feeding signal is an operational signal for conveying the recording medium P to the transfer device 43a from the registration roller 42a. The ON state of the second paper feeding signal indicates an active state of conveying operation. Further, in response to the second paper feeding preparation signal, the print controlling section 400 outputs the second paper feeding signal to the controlling section 110.

The paper ejecting signal is an operational signal for ejecting the recording medium, on which an image is already formed, from the printing section 40 to the post-processing section 50. The ON state of the paper ejecting signal indicates an active state of the ejecting operation. Further, the print controlling section 400 outputs the paper ejecting signal to the post-processing control section 500. The division signal indicates whether or not the images formed onto the recording mediums during the ejecting operation are the print page data indicating presence of the divisions. The ON state of the division signal indicates presence of the divisions. Further, the print controlling section 400 outputs the division signal to the post-processing control section 500.

Initially, by implementing the operations shown in Fig. 9 and Fig. 8, at time t0, there is conducted a consecutive operation including the steps of: storing the various kinds of setting conditions and the image data, established by the operating apparatus 1 or the operation displaying section 30, into the RAM 130 as the job data before the print processing is commenced; referring to the job data, determining whether or not both the post-processing mode D4 and the page number print D5 are established (presence or absence of the settings of both the stapling and the page printing); initializing (setting at "1") the print page number D6 of the job data, the division page counter D7 and the chapter counter D8; generating and setting the print page data set Pd1 in which the page number print data Pn1, based on the division page counter (D7 = 1) and the chapter counter (D8 = 1), is added to the individual image data corresponding to the print page number D6; and transmitting the copy mode D3 of the job data and the post-processing mode D4 with the print start signal to the print controlling section 400 and the post-processing control section 500.

During a period from time t0 to time t1, the recording medium is conveyed to the registration roller 42a from the paper feeding cassettes 41a, and further, synchronized with the second paper feeding preparation signal, the image writing signal PVV turns ON state, so as to form the image of the print page data set Pd1, established in the above, onto the recording medium.

At time t1 when the image writing signal PVV is changed to OFF state from ON state, by implementing the operations shown in Fig. 10 and Fig. 9, there is conducted a consecutive operation including the steps of: adding "1" to the print page number D6 (resulting in D6 = 2); adding "1" to the division page counter D7 (resulting in D7 = 2), since presence of the stapling and absence of the divisions are established for the individual image data corresponding to the print page number D6 (= 1) before adding "1"; and generating and setting the print page data set Pd2 in which the page number print data Pn2, based on the division page counter (D7 = 2) and the chapter counter (D8 = 1), is added to the individual image data corresponding to the print page number D6.

During a period from time t1 to time t2, the recording medium is conveyed to the registration roller 42a from the paper feeding cassettes 41a, and further, synchronized with the second paper feeding preparation signal, the image writing signal PVV turns ON state, so as to form the image of the print page data set Pd2, established in the above, onto the recording medium.

At time t2 when the image writing signal PVV is changed to OFF state from ON state, by implementing the operations shown in Fig. 10 and Fig. 9, there is conducted a consecutive operation including the steps of: adding "1" to the print page number D6 (resulting in D6 = 3); adding "1" to the division page counter D7 (resulting in D7 = 3), since presence of the stapling and absence of the divisions are established for the individual image data corresponding to the print page number D6 (= 1) before adding "1"; and generating and setting the print page data set Pd3 in which the page number print data Pn3, based on the division page counter (D7 = 3) and the chapter counter (D8 = 1), is added to the individual image data corresponding to the print page number D6.

Further, at time t2, the recording medium on which the image of the print page data set Pd1 is formed is ejected to the post-processing section 50.

During a period from time t2 to time t3, the recording medium is conveyed to the registration roller 42a from the paper feeding cassettes 41a, and further, synchronized with the second paper feeding preparation signal, the image writing signal PVV turns ON state, so as to form the image of the print page data set Pd3, established in the above, onto the recording medium.

At time t3 when the image writing signal PVV is changed to OFF state from ON state, by implementing the operations shown in Fig. 10 and Fig. 9, there is conducted a consecutive operation including the steps of: adding "1" to the print page number D6 (resulting in D6 = 4); initializing the division page counter D7 (resulting in D7 = 1), since presence of the stapling and absence of the divisions are established for the individual image data corresponding to the print page number D6 (D6 = 3), and further, since the serial number setting check box G33d is not checked so as to print the page numbers as the serial numbers for every division of the document pages; adding "1" to the chapter counter D8 (resulting in D8 = 2); and generating and setting the print page data set Pd4 in which the page number print data Pn4, based on the division page counter (D7 = 1) and the chapter counter (D8 = 2), is added to the individual image data corresponding to the print page number D6.

Further, at time t3, the recording medium on which the image of the print page data set Pd2 is formed is ejected to the post-processing section 50.

During a period from time t3 to time t4, the recording medium is conveyed to the registration roller 42a from the paper feeding cassettes 41a, and further, synchronized with the second paper feeding preparation signal, the image writing signal PVV turns ON state, so as to form the image of the print page data set Pd4, established in the above, onto the recording medium.

At time t4 when the image writing signal PVV is changed to OFF state from ON state, by implementing the operations shown in Fig. 10 and Fig. 9, there is conducted a consecutive operation including the steps of: adding "1" to the print page number D6 (resulting in D6 = 5); adding "1" to the division page counter D7 (resulting in D7 = 2), since presence of the stapling and absence of the divisions are established for the individual image data corresponding to the print page number (D6 = 4) before adding "1"; and generating and setting the print page data set Pd5 in which the page number print data Pn5, based on the division page counter (D7 = 2) and the chapter counter (D8 = 2), is added to the individual image data corresponding to the print page number D6.

Further, at time t4, the recording medium on which the image of the print page data set Pd3 is formed is ejected to the post-processing section 50. Then, since the division signal turns to ON state, the staple processing is applied to the recording mediums ejected during the period from time t0 to time t4.

During a period from time t4 to time t5, the recording medium is conveyed to the registration roller 42a from the paper feeding cassettes 41a, and further, synchronized with the second paper feeding preparation signal, the image writing signal PVV turns ON state, so as to form the image of the print page data set Pd5, established in the above, onto the recording medium.

At time t5 when the image writing signal PVV is changed to OFF state from ON state, by implementing the operations shown in Fig. 10 and Fig. 9, there is conducted a consecutive operation including the steps of: adding "1" to the print page number D6 (resulting in D6 = 6); adding "1" to the division page counter D7 (resulting in D7 = 3), since presence of the stapling and absence of the divisions are established for the individual image data corresponding to the print page number (D6 = 5) before adding "1"; and generating and setting the print page data set Pd6 in which the page number print data Pn6, based on the division page counter (D7 = 3) and the chapter counter (D8 = 2), is added to the individual image data corresponding to the print page number D6.

Further, at time t5, the recording medium on which the image of the print page data set Pd4 is formed is ejected to the post-processing section 50.

During a period from time t5 to time t6, the recording medium is conveyed to the registration roller 42a from the paper feeding cassettes 41a, and further, synchronized with the second paper feeding preparation signal, the image writing signal PVV turns ON state, so as to form the image of the print page data set Pd6, established in the above, onto the recording medium.

Further, at time t6, the recording medium on which the image of the print page data set Pd5 is formed is ejected to the post-processing section 50.

Further, at time t7, the recording medium on which the image of the print page data set Pd6 is formed is ejected to the post-processing section 50. Then, since the division signal turns to ON state, the staple processing is applied to the recording mediums ejected during the period from time t4 to time t7. After that, the print processing is finalized.

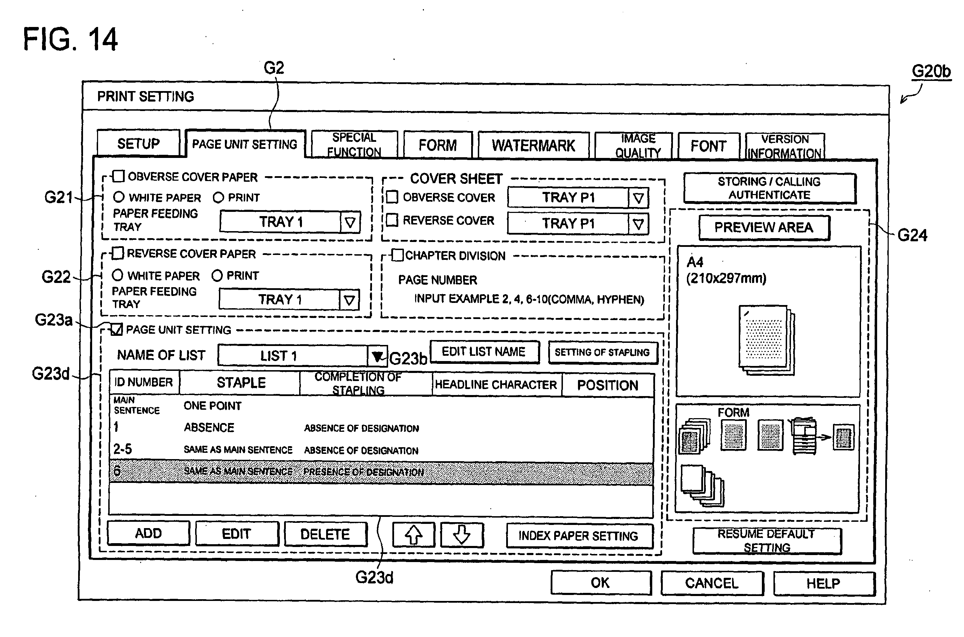

Referring to Fig. 14, Fig. 15(a), Fig. 15(b), Fig. 15(c) and Fig. 16, another example embodied in the present invention will be detailed in the following.

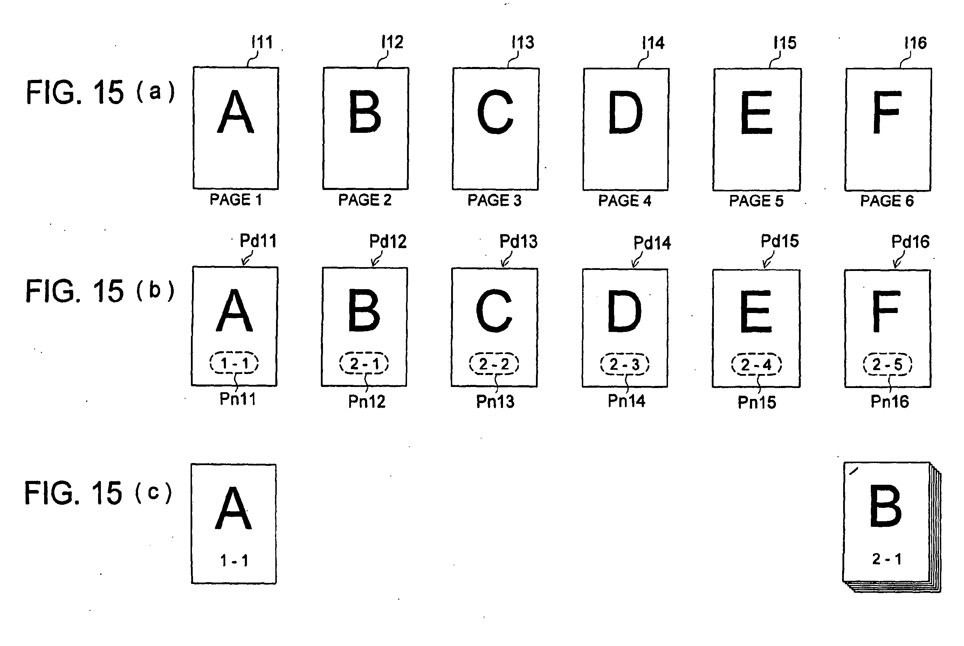

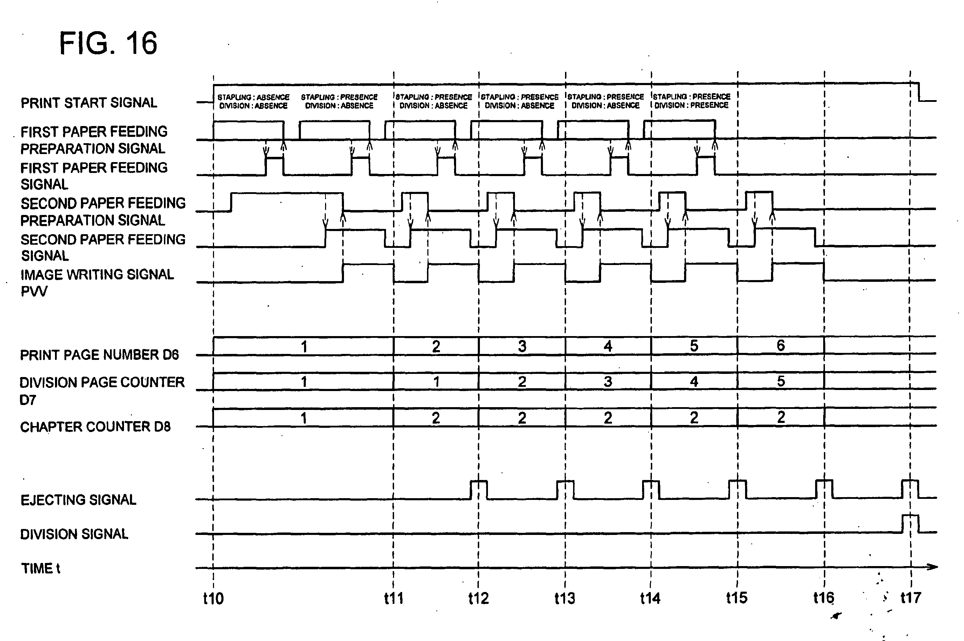

Fig. 14 shows a page unit setting screen G20b, Figs. 15(a), 15(b), 15(c) show exemplified illustrations of the print processing to be performed in the present embodiment, while Fig. 16 shows a time chart of the operations of the image forming apparatus 2, which implements the print processing shown in Figs. 15(a), 15(b), 15(c).

The page unit setting screen G20b shown in Fig. 14 is the same as the page unit setting screen G20a shown in Fig. 4, except that the page condition synoptic table area G23c is changed to a page condition synoptic table area G23d. Accordingly, the same reference numbers are attached to the same sections and only the different sections will be detailed in the following.

With respect to each of the six document pages, the page condition synoptic table area G23d is individually established for each of the conditions. For instance, absence of the stapling and absence of designation of the staple finalizing position are established for the document page having the ID number of 1, one point stapling and absence of designation of the staple finalizing position are established for the document pages having the ID numbers of 2 - 5, and one point stapling and presence of designation of the staple finalizing position are established for the document page having the ID number of 6. Accordingly, the recording medium on which the image of the document page having the ID number of 1 is formed, and the bunch of the recording mediums, on which the images of the document pages having the ID numbers of 2 - 6 are formed and which is stapled, are ejected.

The print processing shown in Figs. 15(a), 15(b), 15(c) and Fig. 16 is an example in the case that, in the various kinds of setting screens shown in Fig. 3, Fig. 5 and Fig. 14, the staple check box G13a is checked so as to apply the staple processing to one position located at a left-upper area, the page unit setting check box G23a is checked so as to process each of the document pages under the setting conditions indicated in the page condition synoptic table area G23c, the page number setting check box G33a is checked, the page number kind setting button G33b is set at N1 - N2, and the serial number setting check box G33d is not checked.

Fig. 15(a) shows image data including a plurality of individual image data sets generated by employing application software corresponding to the plurality of document pages, Fig. 15(b) shows print data including a plurality of print page data sets representing the images to be formed on the recording mediums by the image forming apparatus 2, and Fig. 15(c) shows bunches of the recording mediums to which the post-processing is already applied and which is ejected from the image forming apparatus 2.

The image data, shown in Fig. 15(a) and generated by the operating apparatus 1, includes the individual image data sets I11 - I16 corresponding to each of the document pages. When the image data are transmitted to the image forming apparatus 2 from the operating apparatus 1, the ID numbers (for instance, Page 11, Page 12 --) for discriminating each of the individual image data sets are attached one by one to the individual image data sets I11 - I16 in order of I11 to I16 so as to store them as the job data.

The print data, shown in Fig. 15(b), includes a plurality of print page data sets Pd11 - Pd16 in each of which the page number print data is added to the individual image data. For instance, the print page data sets Pd11 is generated as the data in which page number print data Pn11 is added to the individual image data sets I11.

The page number print data sets shown in Fig. 15(b) are examples in the case that the staple finalizing position is set at the print page data set Pd6, the page number kind is set at N1 - N2 which indicates the chapter number (N1) for discriminating the divisions of the document pages and the chapter page number (N2) for discriminating the page number of the storage medium in each division of the document pages. By applying the present embodiment, the common chapter number (N1) is printed for every division, and the chapter page number (N2), serving as a serial number in which the start page number is set at "1", is printed.

The bunches of recording mediums shown in Fig. 15(c) are illustrative examples in the case that the image of the print page data set Pd11 is formed on the recording medium, while the recording mediums having the images of the print page data sets Pd4 - Pd6 are stapled as another bunch of recording mediums.

Next, an example of the time chart of the operations performed by the image forming apparatus 2, shown in Fig. 16, will be detailed in the following.

Since the various kinds of signals shown in Fig. 16 are the same as those shown in Fig. 13, the explanation for them will be omitted.

Initially, by implementing the operations shown in Fig. 9 and Fig. 10, at time t10, there is conducted a consecutive operation including the steps of: storing the various kinds of setting conditions and the image data, established by the operating apparatus 1 or the operation displaying section 30, into the RAM 130 as the job data before the print processing is commenced; referring to the job data, determining whether or not both the post-processing mode D4 and the page number print D5 are established (presence or absence of the settings of both the stapling and the page printing); initializing (setting at "1") the print page number D6 of the job data, the division page counter D7 and the chapter counter D8; generating and setting the print page data set Pd11 in which the page number print data Pn11, based on the division page counter (D7 = 1) and the chapter counter (D8 = 1), is added to the individual image data corresponding to the print page number D6; and transmitting the copy mode D3 of the job data and the post-processing mode D4 with the print start signal to the print controlling section 400 and the post-processing control section 500.

During a period from time t10 to time t11, the recording medium is conveyed to the registration roller 42a from the paper feeding cassettes 41a, and further, synchronized with the second paper feeding preparation signal, the image writing signal PVV turns ON state, so as to form the image of the print page data set Pd11, established in the above, onto the recording medium.

At time t11 when the image writing signal PVV is changed to OFF state from ON state, by implementing the operations shown in Fig. 10 and Fig. 11, there is conducted a consecutive operation including the steps of: adding "1" to the print page number D6 (resulting in D6 = 2); initializing the division page counter D7 (resulting in D7 = 1), since absence of the stapling is established for the individual image data corresponding to the print page number D6 (D6 = 1) before adding "1", while presence of the stapling is established for the individual image data corresponding to the print page number D6 (D6 = 2), and further, since the serial number setting check box G33d is not checked so as to print the page numbers as the serial numbers for every division of the document pages; adding "1" to the chapter counter D8 (resulting in D8 = 2); and generating and setting the print page data set Pd12 in which the page number print data Pn12, based on the division page counter (D7 = 1) and the chapter counter (D8 = 2), is added to the individual image data corresponding to the print page number D6.

During a period from time t11 to time t12, the recording medium is conveyed to the registration roller 42a from the paper feeding cassettes 41a, and further, synchronized with the second paper feeding preparation signal, the image writing signal PVV turns ON state, so as to form the image of the print page data set Pd12, established in the above, onto the recording medium.

At time t12 when the image writing signal PVV is changed to OFF state from ON state, by implementing the operations shown in Fig. 10 and Fig. 11, there is conducted a consecutive operation including the steps of: adding "1" to the print page number D6 (resulting in D6 = 3); adding "1" to the division page counter D7 (resulting in D7 = 2), since presence of the stapling and absence of the divisions are established for the individual image data corresponding to the print page number (D6 = 2) before adding "1"; and generating and setting the print page data set Pd13 in which the page number print data Pn13, based on the division page counter (D7 = 2) and the chapter counter (D8 = 2), is added to the individual image data corresponding to the print page number D6. Further, at time t12, the recording medium on which the image of the print page data set Pd11 is formed is ejected.

During a period from time t12 to time t13, the recording medium is conveyed to the registration roller 42a from the paper feeding cassettes 41a, and further, synchronized with the second paper feeding preparation signal, the image writing signal PVV turns ON state, so as to form the image of the print page data set Pd13, established in the above, onto the recording medium.

At time t13 when the image writing signal PVV is changed to OFF state from ON state, by implementing the operations shown in Fig. 10 and Fig. 11, there is conducted a consecutive operation including the steps of: adding "1" to the print page number D6 (resulting in D6 = 4); adding "1" to the division page counter D7 (resulting in D7 = 3), since presence of the stapling and absence of the divisions are established for the individual image data corresponding to the print page number (D6 = 3) before adding "1"; and generating and setting the print page data set Pd14 in which the page number print data Pn14, based on the division page counter (D7 = 3) and the chapter counter (D8 = 2), is added to the individual image data corresponding to the print page number D6. Further, at time t13, the recording medium on which the image of the print page data set Pd12 is formed is ejected to the post-processing section 50.

During a period from time t13 to time t14, the recording medium is conveyed to the registration roller 42a from the paper feeding cassettes 41a, and further, synchronized with the second paper feeding preparation signal, the image writing signal PVV turns ON state, so as to form the image of the print page data set Pd14, established in the above, onto the recording medium.

At time t14 when the image writing signal PVV is changed to OFF state from ON state, by implementing the operations shown in Fig. 10 and Fig. 11, there is conducted a consecutive operation including the steps of: adding "1" to the print page number D6 (resulting in D6 = 5); adding "1" to the division page counter D7 (resulting in D7 = 4), since presence of the stapling and absence of the divisions are established for the individual image data corresponding to the print page number (D6 = 4) before adding "1"; and generating and setting the print page data set Pd15 in which the page number print data Pn15, based on the division page counter (D7 = 3) and the chapter counter (D8 = 2), is added to the individual image data corresponding to the print page number D6. Further, at time t14, the recording medium on which the image of the print page data set Pd13 is formed is ejected to the post-processing section 50.

During a period from time t14 to time t15, the recording medium is conveyed to the registration roller 42a from the paper feeding cassettes 41a, and further, synchronized with the second paper feeding preparation signal, the image writing signal PVV turns ON state, so as to form the image of the print page data set Pd15, established in the above, onto the recording medium.

At time t15 when the image writing signal PVV is changed to OFF state from ON state, by implementing the operations shown in Fig. 10 and Fig. 11, there is conducted a consecutive operation including the steps of: adding "1" to the print page number D6 (resulting in D6 = 6); adding "1" to the division page counter D7 (resulting in D7 = 5), since presence of the stapling and absence of the divisions are established for the individual image data corresponding to the print page number (D6 = 5) before adding "1"; and generating and setting the print page data set Pd16 in which the page number print data Pn16, based on the division page counter (D7 = 5) and the chapter counter (D8 = 2), is added to the individual image data corresponding to the print page number D6. Further, at time t15, the recording medium on which the image of the print page data set Pd14 is formed is ejected to the post-processing section 50.

During a period from time t15 to time t16, the recording medium is conveyed to the registration roller 42a from the paper feeding cassettes 41a, and further, synchronized with the second paper feeding preparation signal, the image writing signal PVV turns ON state, so as to form the image of the print page data set Pd16, established in the above, onto the recording medium.

Further, at time t16, the recording medium on which the image of the print page data set Pd15 is formed is ejected to the post-processing section 50.

Further, at time t17, the recording medium on which the image of the print page data set Pd16 is formed is ejected to the post-processing section 50. Then, since the division signal turns to ON state, the staple processing is applied to the recording mediums ejected during the period from time t13 to time t17. After that, the print processing is finalized.

As described in the foregoing, according to the present embodiment, it becomes possible to print the page numbers, in which the start page number is set at "1" for every division of the document pages to which the post-processing is to be applied without conducting any operations by the user. For instance, the page numbers, to be printed on the bunch of the recording mediums to which the staple processing is to be applied as the post-processing, always start from "1". Accordingly, it becomes possible not only to print the serial page numbers, in which the start page number is set at "1" for every bunch of the document pages, but also for the user to omit the labor hour for individually setting the start number for every division of the document pages to which the post-processing is to be applied, resulting in an improvement of the maneuverability for the user.

Further, it becomes possible for the user to select whether the page numbers to be printed onto the recording medium should be the serial numbers in which the start page number is set at "1" for every bunch of the document pages, or the continuous numbers throughout the whole document including a plurality of document pages, resulting in an improvement of the usability for the user.

Still further, since the user can select a kind of the page number, it becomes possible to print a kind of the page number desired by the user.

According to the present embodiment, the following effects can be attained.
(1) Since it becomes possible to print the page numbers, in which the start page number is set at "1" for every division of the document pages to which the post-processing is to be applied, as the serial numbers, the user can omit the labor hour for setting the start page number for every division of the document pages to which the post-processing is to be applied. Therefore, the user-friendliness can be improved.
(2) Since the user can select whether the page numbers to be printed onto the recording medium should be the serial numbers in which the start page number is set at "1" for every bunch of the document pages, or the continuous numbers throughout the whole document including a plurality of document pages, the usability for the user can be improved.
(3) Since the page numbers, to be printed on the bunch of the recording mediums to which the staple processing is to be applied, always start from "1", the serial numbers in which the start page number is set at "1" can be printed for every bunch of the recording mediums.
(4) Since the user can select a kind of the page number, it becomes possible to print a kind of the page number desired by the user.
(5) Since it becomes possible not only to print the chapter number for discriminating the division of the document pages, but also to start the page number of the recording mediums in each of the divisions of the document pages from the start page number of "1", the divisions of the document pages can be clarified, resulting in a uniformity of the page numbers throughout the document.
(6) Since it becomes possible to display a message for urging the selecting instruction of a kind of the page number onto the display device, the usability for the user can be improved.

## Claims

1. An Image forming apparatus (2), comprising:
an image forming section (43) to form images onto recording mediums, based on image data representing a document set including a plurality of document pages, and to print a page number onto each of the recording mediums when accepting an instruction for printing page numbers onto the recording mediums; and
a post-processing section (50) to apply a post-processing to the recording mediums;
whereby said post-processing is a staple processing for stapling the record mediums on which images are formed
**characterized in that**
said apparatus further comprises a staple processing and division setting input section (30) that accepts a designation dividing the document pages into a plurality of divisions by establishing for each page individually a page stapling condition and by designating a staple finalizing position at a division position;
and
a page number setting and controlling section (110) that controls the image forming section, and in case there is an instruction for printing page numbers prints serial numbers in which a start number is set at "1" onto document pages included in each of the divisions based on a staple processing division setting input.

2. The Image forming apparatus, recited in claim 1,
**characterized in that**
the staple processing division setting input section accepts a designation of a booklet dividing mode, which allows to include both recording mediums to which the staple processing is to be applied, and recording mediums to which the staple processing is not to be applied, in mixed state, with respect to the recording mediums on which the images are formed by the image forming section.

3. The image forming apparatus, recited in claim 1 or claim 2, further comprising:
a start number selecting and inputting section;
**characterized in that**
the page number setting and controlling section overwrites the start number setting to "1" and sets the start number (D6) of the page numbers for each of the divisions of the plurality of document pages, based on the setting instruction inputted from the start number selecting and inputting section.

4. The Image forming apparatus, recited in any one of claims 1 - 3,
**characterized by** further comprising:
a page number type selecting section that accepts an instruction for selecting a type of the page numbers.

5. The image forming apparatus, recited in claim 4,
**characterized in that**,
if the page number type selecting section selects the page numbers that includes chapter numbers for discriminating the divisions and for discriminating the page numbers in each of the specified divisions, the page number setting and controlling section sets each of the chapter numbers for every specific division and sets the chapter page numbers as the serial numbers in which a start number is set at "1" for each of the specific divisions.

6. An Image forming system, comprising:
an operating apparatus (1) to transmit image data representing a document set including a plurality of document pages, an instruction for printing page numbers onto recording mediums on which images are formed, based on the image data, and an instruction of a post-processing to be applied to the recording mediums; and
an image forming apparatus (2) that includes an image forming section (43) to form the images onto the recording mediums, based on image data received from the operating apparatus, and to print a page number onto each of the recording mediums when receiving the instruction for printing the page numbers from the operating apparatus,
and a post-processing section (50) to apply the post-processing to the recording mediums in accordance with the instruction of the post-processing received from the operating apparatus; and said post-processing is a staple processing
**characterized in that**
the operating apparatus and the image forming apparatus are communicatively coupled to each other,
and the operating apparatus includes:
a staple processing and division setting input section that accepts a designation deviding the document pages into a plurality of divisions by establishing for each page individually a page stapling condition and by designating a staple finalizing position at a division position.
and transmits the designation of the divisions to the image forming apparatus;
and the image forming apparatus includes:
a page number setting and controlling section (110) that controls the image forming section, so as to print serial numbers in which a start number is set at "1" onto document pages included in each of the divisions.

7. The image forming system, recited in claim 6,
**characterized in that**
the staple processing division setting input section accepts
a designation of a booklet dividing mode, which allows to include both recording mediums to which the staple processing is to be applied, and recording mediums to which the staple processing is not to be applied, in mixed state, with respect to the recording mediums on which the images are formed by the image forming section,
and a designation for dividing the plurality of document pages to be processed by the staple processing section into a plurality of divisions,
and transmits the designation of a booklet dividing mode and the other designation for dividing to the image forming apparatus.

8. The image forming system, recited in claim 7,
wherein
the operating apparatus further includes:
a start number selecting and inputting section;
**characterized in that**
the page number setting and controlling section overwrites the start number setting to "1" and sets the start number (D6) of the page numbers for each of the divisions of the plurality of document pages, based on the setting instruction inputted from the start number selecting and inputting section.

9. The image forming system, recited in any one of claims 7 - 8,
**characterized in that**
the operating apparatus further includes:
a page number type selecting section to accepts an instruction for selecting a type of the page numbers.

10. The image forming system, recited in claim 9,
**characterized in that**,
If the page number type selecting section selects the page numbers that includes chapter numbers for discriminating the divisions and for discriminating the page numbers in each of the specified divisions, the page number setting and controlling section sets each of the chapter numbers for every specific division and sets the chapter page numbers as the serial numbers in which a start number is set at "1" for each of the specific divisions.

11. The image forming system, recited in claim 8,
**characterized in that**
the operating apparatus further includes:
a displaying section to display a message for urging the instruction for selecting the type of the page numbers, based on the designation of the divisions.

## Patentansprüche

1. Bilderzeugungsvorrichtung (2) mit:
einem Bilderzeugungsbereich (43) zur Erzeugung von Bildern auf Aufzeichnungsmedien basierend auf Bilddaten, die einen Dokumentensatz darstellen, der eine Vielzahl von Dokumentseiten umfasst, und zum Drucken einer Seitenzahl auf jedes der Aufzeichnungsmedien bei Empfang einer Anweisung zum Drucken von Seitenzahlen auf die Aufzeichnungsmedien; und
einem Nachbearbeitungsbereich (50) zur Durchführung einer Nachbearbeitung an den Aufzeichnungsmedien;
wobei diese Nachbearbeitung aus einer Stapelbearbeitung besteht zum Stapeln der Aufzeichnungsmedien, auf denen Bilder erzeugt sind
**dadurch gekennzeichnet, dass**
die Vorrichtung ferner einen Eingabebereich zur Stapelbearbeitung und zum Einrichten von Unterteilungen (30) aufweist, welcher eine Bestimmung entgegennimmt zum Unterteilen der Dokumentseiten in eine Vielzahl von Unterteilungen, indem einzeln für jede Seite eine Seitenstapelbedingung erstellt und eine Stapelfertigstellungsposition an einer Unterteilungsposition bestimmt wird;
und
einen Bereich zur Seitenzahlerzeugung und - steuerung (110), welcher den Bilderzeugungsbereich steuert und in dem Fall, dass eine Anweisung zum Drucken von Seitenzahlen besteht, Seriennummern, bei welchen eine Startzahl mit "1" eingestellt ist, auf die in jeder der Unterteilungen vorliegenden Dokumentseiten druckt, und zwar basierend auf einer Unterteilungserstellungseingabe zur Stapelverarbeitung.

2. Bilderzeugungsvorrichtung gemäß Anspruch 1,
**dadurch gekennzeichnet, dass** der Eingabebereich zur Stapelverarbeitung und zum Einrichten von Unterteilungen eine Bestimmung eines Druckschriftunterteilungsmodus entgegennimmt, welche ermöglicht, sowohl Aufzeichnungsmedien, auf welche die Stapelverarbeitung angewandt werden soll, als auch Aufzeichnungsmedien, auf welche die Stapelverarbeitung nicht angewandt werden soll, in gemischter Weise hinsichtlich der Aufzeichnungsmedien, auf welchen die Bilder von dem Bilderzeugungsbereich erzeugt werden, einzubeziehen.

3. Bilderzeugungsvorrichtung gemäß Anspruch 1 oder Anspruch 2,
ferner mit:
einem Bereich zur Auswahl und Eingabe einer Anfangszahl;
**dadurch gekennzeichnet, dass**
der Bereich zur Erzeugung und Steuerung der Seitenzahl die Einstellung der Anfangszahl auf "1" überschreibt und die Anfangszahl (D6) der Seitenzahlen für jede der Unterteilungen der Vielzahl an Dokumentseiten basierend auf der Einstellungsanweisung einstellt, die von dem Bereich zur Auswahl und Eingabe der Anfangszahl eingegeben wurde.

4. Bilderzeugungsvorrichtung gemäß irgendeinem der Ansprüche 1 - 3,
**dadurch gekennzeichnet, dass** sie ferner aufweist:
einen Bereich zur Auswahl einer Seitenzahlart, welcher einer Anweisung zur Auswahl einer bestimmten Art von Seitenzahlen entgegennimmt.

5. Bilderzeugungsvorrichtung gemäß Anspruch 4,
**dadurch gekennzeichnet, dass**,
wenn der Bereich zur Auswahl der Seitenzahlart die Seitenzahlen auswählt, welche Kapitelnummern zur Unterscheidung der Unterteilungen und zur Unterscheidung der Seitenzahlen in jeder der spezifizierten Unterteilungen umfassen, erzeugt der Bereich zur Erzeugung und Steuerung der Seitenzahl jede der Kapitelnummern für jede spezifische Unterteilung und erzeugt die Kapitelseitenzahlen als Seriennummern, bei welchen eine Anfangszahl auf "1" für jede der spezifischen Unterteilungen eingestellt ist.

6. Bilderzeugungssystem mit:
einer Steuervorrichtung (1) zur Übermittlung von Bilddaten, welche einen Dokumentensatz darstellen, der eine Vielzahl von Dokumentseiten umfasst, einer Anweisung zum Drucken von Seitenzahlen auf Aufzeichnungsmedien, auf welchen Bilder basierend auf den Bilddaten erzeugt sind, und einer Anweisung für eine auf die Aufzeichnungsmedien anzuwendende Nachbearbeitung; und
einer Bilderzeugungsvorrichtung (2), welche einen Bilderzeugungsbereich (43) aufweist zur Erzeugung von Bildern auf den Aufzeichnungsmedien basierend auf von der Steuervorrichtung empfangenen Bilddaten und zum Drucken einer Seitenzahl auf jedes der Aufzeichnungsmedien bei Empfang der Anweisung zum Drucken von Seitenzahlen von der Steuervorrichtung,
und einem Nachbearbeitungsbereich (50) zur Durchführung einer Nachbearbeitung an den Aufzeichnungsmedien in Übereinstimmung mit der von der Steuervorrichtung empfangenen Anweisung zur Nachbearbeitung; und wobei diese Nachbearbeitung aus einer Stapelbearbeitung besteht,
**dadurch gekennzeichnet, dass**
die Steuervorrichtung und die Bilderzeugungsvorrichtung in einer Kommunikationsverbindung miteinander gekoppelt sind,
und dass die Steuervorrichtung umfasst:
einen Eingabebereich zur Stapelbearbeitung und zum Einrichten von Unterteilungen, welcher eine Bestimmung entgegennimmt zum Unterteilen der Dokumentseiten in eine Vielzahl von Unterteilungen, indem einzeln für jede Seite eine Seitenstapelbedingung erstellt und eine Stapelfertigstellungsposition an einer Unterteilungsposition bestimmt wird, und welcher die Bestimmung der Unterteilungen an die Bilderzeugungsvorrichtung übermittelt;
und dass die Bilderzeugungsvorrichtung umfasst:
einen Bereich zur Seitenzahlerzeugung und - steuerung (110), welcher den Bilderzeugungsbereich derart steuert, dass Seriennummern, bei welchen eine Startzahl mit "1" eingestellt ist, auf die in jeder der Unterteilungen vorliegenden Dokumentseiten gedruckt werden.

7. Bilderzeugungssystem gemäß Anspruch 6,
**dadurch gekennzeichnet, dass**
der Eingabebereich zur Stapelverarbeitung und zum Einrichten von Unterteilungen entgegennimmt:
eine Bestimmung eines Druckschriftunterteilungsmodus, welche ermöglicht, sowohl Aufzeichnungsmedien, auf welche die Stapelverarbeitung angewandt werden soll, als auch Aufzeichnungsmedien, auf welche die Stapelverarbeitung nicht angewandt werden soll, in gemischter Weise hinsichtlich der Aufzeichnungsmedien, auf welchen die Bilder von dem Bilderzeugungsbereich erzeugt werden, einzubeziehen,
und eine Bestimmung zum Unterteilen der Vielzahl von Dokumentseiten, die von dem Bereich zur Stapelverarbeitung zu einer Vielzahl von Unterteilungen verarbeitet werden sollen,
und er die Bestimmung eines Druckschriftunterteilungsmodus und die andere Bestimmung zur Unterteilung an die Bilderzeugungsvorrichtung übermittelt.

8. Bilderzeugungssystem gemäß Anspruch 7,
wobei
die Steuervorrichtung ferner umfasst:
einem Bereich zur Auswahl und Eingabe einer Anfangszahl;
**dadurch gekennzeichnet, dass**
der Bereich zur Erzeugung und Steuerung der Seitenzahl die Einstellung der Anfangszahl auf "1" überschreibt und die Anfangszahl (D6) der Seitenzahlen für jede der Unterteilungen der Vielzahl an Dokumentseiten basierend auf der Einstellungsanweisung einstellt, die von dem Bereich zur Auswahl und Eingabe der Anfangszahl eingegeben wurde.

9. Bilderzeugungssystem gemäß irgendeinem der Ansprüche 7 - 8,
**dadurch gekennzeichnet, dass**
die Steuervorrichtung ferner umfasst:
einen Bereich zur Auswahl einer Seitenzahlart, welcher einer Anweisung zur Auswahl einer bestimmten Art von Seitenzahlen entgegennimmt.

10. Bilderzeugungssystem gemäß Anspruch 9,
**dadurch gekennzeichnet, dass**,
wenn der Bereich zur Auswahl der Seitenzahlart die Seitenzahlen auswählt, welche Kapitelnummern zur Unterscheidung der Unterteilungen und zur Unterscheidung der Seitenzahlen in jeder der spezifizierten Unterteilungen umfassen, erzeugt der Bereich zur Erzeugung und Steuerung der Seitenzahl jede der Kapitelnummern für jede spezifische Unterteilung und erzeugt die Kapitelseitenzahlen als Seriennummern, bei welchen eine Anfangszahl auf "1" für jede der spezifischen Unterteilungen eingestellt ist.

11. Bilderzeugungssystem gemäß Anspruch 8,
**dadurch gekennzeichnet, dass**
die Steuervorrichtung ferner umfasst:
einen Anzeigebereich zum Anzeigen einer Nachricht zum Beschleunigen der Anweisung zur Auswahl der Art der Seitenzahlen basierend auf der Bestimmung der Unterteilungen.

## Revendications

1. Dispositif de formation d'image (2) comportant :
une section de formation d'image (43) pour former des images sur des médias d'enregistrement à la base des données d'image qui représentent un ensemble de documents comprenant une pluralité de pages de document, et pour imprimer un numéro de page sur chacun des médias d'enregistrement quand une instruction d'imprimer des numéros de page sur les médias d'enregistrement est reçue ; et
une section de post-traitement (50) pour réaliser un post-traitement des médias d'enregistrement ;
dans lequel le dit post-traitement est un traitement d'empilage pour empiler les médias d'enregistrement sur lesquels des images sont formées,
**caractérisé en ce que**
le dit dispositif comprend en outre une section d'entrée pour le traitement de piles et l'établissement de subdivisions, qui reçoit une commande de division des pages dans une pluralité de subdivisions en établissant une condition d'empilage de page individuellement pour chaque page et en déterminant une position de finissage de pile à une position de subdivision ;
et
une section pour numéroter et commander le numérotage des pages (110) qui commande la section de formation d'image et qui, s'il y a une instruction d'imprimer des numéros de page, imprime des numéros de série, pour lesquels un numéro initial est mis à « 1 », sur des pages de document contenues dans chacune des subdivisons à la base d'une entrée d'établissement de subdivisions et de traitement de piles.

2. Dispositif de formation d'image selon la revendication 1,
**caractérisé en ce que**
la section d'entrée pour le traitement de piles et l'établissement de subdivisions reçoit une commande d'un mode de subdivision d'ouvrage imprimé qui permet d'inclure et des médias d'enregistrement auxquels il faut appliquer le traitement d'empilage et des médias d'enregistrement auxquels il ne faut pas appliquer le traitement d'empilage d'une manière mélangée par rapport aux médias d'enregistrement sur lesquels les images sont formées par la section de formation d'image.

3. Dispositif de formation d'image selon la revendication 1 ou la revendication 2,
en outre comprenant :
une section de sélection et d'entrée d'un numéro initial,
**caractérisé en ce que**
la section pour numéroter et commander le numérotage des pages recouvre la mise à « 1 » du numéro initial et règle le numéro initial (D6) des numéros de page pour chacune des subdivisions de la pluralité de pages de document à la base de l'instruction de réglage entrée par la section de sélection et d'entrée d'un numéro initial.

4. Dispositif de formation d'image selon l'une quelconque des revendications 1 à 3,
**caractérisé en ce qu'**il comprend en outre :
une section de sélection de type de numéro de page qui reçoit une instruction de sélectionner un type de numéros de page.

5. Dispositif de formation d'image selon la revendication 4,
**caractérisé en ce que**
si la section de sélection de type de numéro de page sélectionne des numéros de page qui comprennent des numéros de chapitre pour distinguer les subdivisions et pour distinguer les numéros de page dans chacune des subdivisions spécifiées, la section pour numéroter et commander le numérotage des pages établit chacun des numéros de chapitre pour chaque subdivision spécifique et établit les numéros de chapitre en tant que numéros de série, dans lesquels un numéro initial est mis à « 1 » pour chacune des subdivisions spécifiques.

6. Système de formation d'image comprenant :
un dispositif de commande (1) pour transmettre des données d'image qui représentent un ensemble de documents comprenant une pluralité de pages de document, une instruction d'imprimer des numéros de page sur des médias d'enregistrement sur lesquels des images sont formées à la base des données d'image et une instruction d'un post-traitement à appliquer aux médias d'enregistrement ; et
un dispositif de formation d'image (2) qui comprend une section de formation d'image (43) pour former des images sur les médias d'enregistrement à la base des données d'image reçues du dispositif de commande et pour imprimer un numéro de page sur chacun des médias d'enregistrement quand une instruction d'imprimer des numéros est reçue du dispositif de commande,
et une section de post-traitement (50) pour appliquer le post-traitement aux médias d'enregistrement conformément à l'instruction du post-traitement reçue du dispositif de commande ; et le dit post-traitement est un traitement d'empilage
**caractérisé en ce que**
le dispositif de commande et le dispositif de formation d'image sont reliés l'un à l'autre par une liaison de communication,
et le dispositif de commande comprend :
une section d'entrée pour le traitement de piles et l'établissement de subdivisions, qui reçoit une commande de division des pages dans une pluralité de subdivisions en établissant une condition d'empilage de page individuellement pour chaque page et en déterminant une position de finissage de pile à une position de subdivision,
et il transmet la commande des subdivisions au dispositif de formation d'image ;
et le dispositif de formation d'image comprend :
une section pour numéroter et commander le numérotage des pages (110) qui commande la section de formation d'image de sorte que des numéros de série, pour lesquels un numéro initial est mis à « 1 », sont imprimés sur des pages de document contenues dans chacune des subdivisons.

7. Système de formation d'image selon la revendication 6,
**caractérisé en ce que**
la section d'entrée pour le traitement de piles et l'établissement de subdivisions reçoit une commande d'un mode de subdivision d'ouvrage imprimé qui permet d'inclure et des médias d'enregistrement auxquels il faut appliquer le traitement d'empilage et des médias d'enregistrement auxquels il ne faut pas appliquer le traitement d'empilage d'une manière mélangée par rapport aux médias d'enregistrement sur lesquels les images sont formées par la section de formation d'image,
et une commande de diviser la pluralité de pages de document à traiter par la section de traitement de piles dans une pluralité de subdivisions,
et elle transmet la commande d'un mode de subdivision d'ouvrage imprimé et l'autre commande de division au dispositif de formation d'image.

8. Système de formation d'image selon la revendication 7,
dans lequel
le dispositif de commande comprend en outre :
une section de sélection et d'entrée d'un numéro initial,
**caractérisé en ce que**
la section pour numéroter et commander le numérotage des pages recouvre la mise à « 1 » du numéro initial et règle le numéro initial (D6) des numéros de page pour chacune des subdivisions de la pluralité de pages de document à la base de l'instruction de réglage entrée par la section de sélection et d'entrée d'un numéro initial.

9. Système de formation d'image selon l'une quelconque des revendications 7 à 8,
**caractérisé en ce que**
le dispositif de commande comprend en outre :
une section de sélection de type de numéro de page qui reçoit une instruction de sélectionner un type de numéros de page.

10. Système de formation d'image selon la revendication 9,
**caractérisé en ce que**
si la section de sélection de type de numéro de page sélectionne des numéros de page qui comprennent des numéros de chapitre pour distinguer les subdivisions et pour distinguer les numéros de page dans chacune des subdivisions spécifiées, la section pour numéroter et commander le numérotage des pages établit chacun des numéros de chapitre pour chaque subdivision spécifique et établit les numéros de chapitre en tant que numéros de série, dans lesquels un numéro initial est mis à « 1 » pour chacune des subdivisions spécifiques.

11. Système de formation d'image selon la revendication 8,
**caractérisé en ce que**
le dispositif de commande comprend en outre :
une section d'affichage pour afficher un message pour presser l'instruction de sélection du type de numéro de page à la base de la commande des subdivisions.
